# EUROPEAN PATENT SPECIFICATION

(11) **EP 3 459 688 B1**
(45) Date of publication and mention of the grant of the patent: **17.02.2021**
(21) Application number: 17799659.2
(22) Date of filing: 17.05.2017
(51) Int. Cl.: B25J 11/00, B25J 9/00, B25J 9/16, B25J 19/02, A47L 9/28, G05D 1/02

(54) **MOBILE ROBOT AND CONTROL METHOD THEREFOR**
MOBILER ROBOTER UND STEUERUNGSVERFAHREN DAFÜR
ROBOT MOBILE ET SON PROCÉDÉ DE COMMANDE

(30) Priority: 17.05.2016 KR 20160060444; 27.10.2016 KR 20160141106
(43) Date of publication of application: 27.03.2019
(73) Proprietor: LG Electronics Inc., Seoul 07336 (KR)
(72) Inventor: JUN, Woochan, Seoul 08592 (KR); SUNG, Chulmo, Seoul 08592 (KR)
(74) Representative: Vossius & Partner Patentanwälte Rechtsanwälte mbB
(86) International application number: PCT/KR2017/005132
(87) International publication number: WO 2017/200302

(56) References cited:
- EP-A1- 2 677 386
- CN-U- 205 031 182
- KR-A- 20130 141 979
- KR-A- 20150 050 160
- KR-A- 20160 043 841
- KR-B1- 101 362 373
- US-A1- 2015 115 876
- US-A1- 2015 168 954
- US-A1- 2015 168 954

## Description

### [Technical Field]

The present invention relates to a mobile robot and a method of controlling the same, and, more particularly, to a mobile robot capable of detecting and avoiding an obstacle and a method of controlling the same.

### [Background Art]

In general, a mobile robot is a device for sucking in foreign materials such as dust from a floor while autonomously traveling about an area to be cleaned without user intervention.

Such a mobile robot detects distances from obstacles such as furniture, office equipment or walls in a cleaning area and maps the cleaning area or controls driving of a left wheel and a right wheel, thereby avoiding the obstacles.

Conventionally, a method of measuring a movement distance of a mobile robot through a sensor for sensing a ceiling or a floor and calculating a distance from an obstacle based on the movement distance is used. However, since this method is an indirect method of estimating the distance from the obstacle based on the movement distance of the mobile robot, if the movement distance of the mobile robot is not accurately measured due to curvature of the floor, the distance from the obstacle may be erroneously calculated. In particular, a distance measurement method mainly used for the mobile robot uses infrared light or ultrasonic waves. The amount of light or sound scattered by an obstacle is large and thus a considerable error may occur in distance measurement.

Technology for emitting and capturing light of specific patterns to the front side of a mobile robot, extracting a pattern from the captured image, detecting the state of an obstacle in a cleaning area based on the pattern, and controlling travel has been applied. For example, Korean Patent Laid-Open Publication No. 10-2013-0141979 (hereinafter referred to as '970 invention) discloses a mobile robot including a light source for emitting light of a cross pattern and a camera for obtaining the image of the front side of a cleaner.

However, since such a conventional mobile robot is configured to emit light at a certain angle from one light source, an obstacle detection range is restricted and it is difficult to detect a three-dimensional shape of an obstacle having a height.

In addition, when the conventional mobile robot enters a narrow area having many obstacles, movement of the mobile robot may be restricted by the obstacles. In particular, even if the mobile robot detects obstacles and attempts to avoid the obstacles, a battery may be discharged due to repeated avoidance of the plurality of obstacles.

In order to cope with such a restriction situation, the mobile robot may not enter a specific area. However, in this case, a cleanable area may be reduced.

US 2015/168954 A1 relates to system and method through which a mobile device, such as a robot, can detect obstacles while navigating in an environment using a laser pattern to augment the visible field of a visual sensor and measure the distance to objects.

US 2015/115876 A1 relates to a mobile robot having a self-charging function, a charging apparatus to charge the mobile robot, and a mobile robot system including the mobile robot and the charging apparatus.

Accordingly, there is a need for a method of determining whether a mobile robot is restricted due to a plurality of obstacles and enabling the mobile robot to escape from a restriction situation.

### [Disclosure]

### [Technical Problem]

An object of the present invention devised to solve the problem lies in a mobile robot capable of determining whether travel of the mobile robot is restricted due to a plurality of obstacles and setting an escape route based on peripheral obstacle information to escape from a restriction situation, and a method of controlling the same.

### [Technical Solution]

The invention is defined by the independent claims. The dependent claims relate to preferred embodiments of the invention.

The object of the present invention can be achieved by providing a mobile robot including a main body configured to travel in a cleaning area and to suck in a foreign material about the cleaning area, a first pattern emission unit disposed on a front surface of the main body to emit light of a first pattern toward a front lower side of the main body, a second pattern emission unit disposed on the front surface of the main body and disposed below the first pattern emission unit to emit light of a second pattern toward a front upper side of the main body, an image obtainer provided on the front surface of the main body to obtain an image of a front side of the main body, and a controller configured to detect a first light pattern corresponding to the light of the first pattern and a second light pattern corresponding to the light of the second pattern from the obtained image received from the image obtainer, to determine an obstacle, and to perform control to pass or avoid the obstacle, wherein the controller determines a restriction situation when travel is impossible due to a plurality of obstacles to set an escape mode, detects information on peripheral obstacles to set an escape route, and enables escape from the restriction situation through travel along the escape route, wherein, when an operation mode of the main body (11) is a quick cleaning mode upon setting the escape mode, the controller (200) determines whether entry is possible according to a distance between two detected obstacles among the plurality of obstacles and sets the escape route if a travelable area is present, and when an operation mode of the main body (11) is a basic mode upon setting the escape mode, the controller (200) detects information on the plurality of obstacles within a predetermined distance, generates a peripheral area map including the information on the obstacles, searches for a travelable area based on the peripheral area map, and sets the escape route, and wherein, when an operation mode of the main body (11) is a basic mode, the controller (200) makes one rotation at a current position, analyzes the first light pattern (P1) or the second light pattern (P2) of the obtained image during one rotation, detects the information on the plurality of obstacles, and generates the peripheral area map.

According to another aspect of the present invention, a method of controlling a mobile robot includes emitting light of a first pattern and light of a second pattern and traveling while capturing a front image, detecting a first light pattern corresponding to the light of the first pattern and a second light pattern corresponding to the second pattern from an image obtained by capturing and detecting an obstacle, determining a restriction situation when travel is impossible due to a plurality of obstacles detected by the first light pattern or the second light pattern and setting an escape mode, detecting information on the plurality of obstacles, searching for a travelable route and setting an escape route, and traveling along the escape route and escaping from the restriction situation, wherein the setting of the escape route further includes: when an operation mode is a quick cleaning mode, determining whether entry is possible according to a distance between two detected obstacles among the plurality of obstacles and setting the escape route if a travelable area is present; when the operation mode is a basic mode, detecting information on the plurality of obstacles within a predetermined distance, generating a peripheral area map including the information on the obstacles, searching for a travelable area based on the peripheral area map, and setting the escape route, when the operation mode is a basic mode; and when the operation mode is the basic mode, the first light pattern (P1) or the second light pattern (P2) of the obtained image received while making one rotation is analyzed, the information on the plurality of obstacles is detected, and the peripheral area map is generated.

### [Advantageous Effects]

In the mobile robot and the method of controlling the same according to the present invention, it is possible to obtain detailed information on obstacles using patterns, which are vertically arranged and emitted, and to rapidly determine and cope with the obstacles. Whether travel is restricted due to a plurality of obstacles is determined based on information on peripheral obstacles, and an escape route is set based on the information on the peripheral obstacles. Therefore, it is possible to rapidly determine the travel state of the mobile robot, to determine and cope with the obstacles, and to more efficiently escape from a restriction situation.

### [Description of Drawings]

FIG. 1a is a perspective view of a mobile robot according to an embodiment of the present invention.
FIG. 1b is a perspective view of a mobile robot according to another embodiment of the present invention.
FIG. 2 is a view showing a horizontal angle of view of the mobile robot of FIG. 1.
FIG. 3a is a front view of the mobile robot of FIG. 1a.
FIG. 3b is a front view of the mobile robot of FIG. 1b.
FIG. 4 is a view showing the bottom of the mobile robot of FIG. 1.
FIG. 5 is a block diagram showing main portions of the mobile robot of FIG. 1.
FIG. 6 is a front view and a side view of an obstacle sensing unit according to a first embodiment.
FIG. 7 is a view showing a pattern emission range and an obstacle detection range of the obstacle sensing unit of FIG. 6.
FIG. 8 is a front view and a side view of an obstacle sensing unit according to a second embodiment.
FIG. 9 is a view showing a pattern emission range and an obstacle detection range of the obstacle sensing unit of FIG. 8.
FIG. 10 is a view showing the light of a pattern emitted by a first pattern emission unit of FIG. 1a.
FIG. 11 is a view showing the shape of a pattern irradiated onto an obstacle in the mobile robot of FIG. 1a.
FIG. 12 is a view showing pattern light of FIG. 1b.
FIG. 13 is a view showing an obtained image according to change in position of the mobile robot of FIG. 1b.
FIG. 14 is a view showing an image obtained by pattern light irradiated onto an obstacle by the mobile robot of FIG. 1b.
FIG. 15 is a view referenced to describe a restriction situation of a mobile robot according to an embodiment of the present invention.
FIG. 16 is a view referenced to describe escape operation of the mobile robot in the restriction situation of FIG. 15.
FIG. 17 is a view referenced to describe operation of the mobile robot for determining whether entry is possible in the restriction situation of FIG. 15.
FIG. 18 is a view referenced to describe operation of the mobile robot for determining an obstacle in the restriction situation of FIG. 15.
FIG. 19 is a view referenced to describe operation of the mobile robot for setting an escape route in the restriction situation of FIG. 15.
FIG. 20 is a view referenced to describe operation of the mobile robot escaping from the restriction situation of FIG. 15.
FIG. 21 is a view referenced to describe operation of the mobile robot for obtaining information on a peripheral area in the restriction situation of FIG. 15.
FIG. 22 is a view showing a peripheral area map generated by the mobile robot in the restriction situation of FIG. 15.
FIG. 23 is a view referenced to describe an escape method based on the mode of a mobile robot according to an embodiment of the present invention.
FIG. 24 is a flowchart illustrating a method of controlling a mobile robot escaping from a restriction situation according to an embodiment of the present invention.
FIG. 25 is a flowchart illustrating a method of controlling a mobile robot escaping from a restriction situation in a basic mode.
FIG. 26 is a flowchart illustrating a method of controlling a mobile robot escaping from a restriction situation in a quick cleaning mode.

### [Best Mode]

The advantages and features of the present invention and the way of attaining the same will become apparent with reference to embodiments described below in detail in conjunction with the accompanying drawings. Embodiments, however, may be embodied in many different forms and should not be constructed as being limited to example embodiments set forth herein. Rather, these example embodiments are provided so that this disclosure will be through and complete and will fully convey the scope to those skilled in the art. The scope of the present invention should be defined by the claims. Wherever possible, the same reference numbers will be used throughout the drawings to refer to the same or like parts. In the drawings, the sizes of layers and regions and the relative sizes thereof may be exaggerated for clarity of description. In addition, a controller and each unit of a mobile robot may be implemented by one or more processors or a hardware device.

Hereinafter, the embodiment of the present invention will be described in detail with reference to the drawings.

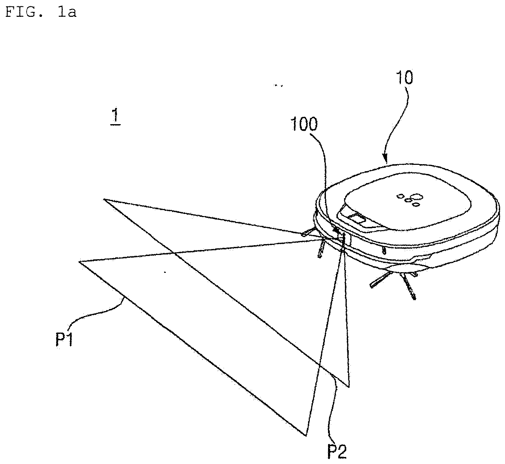

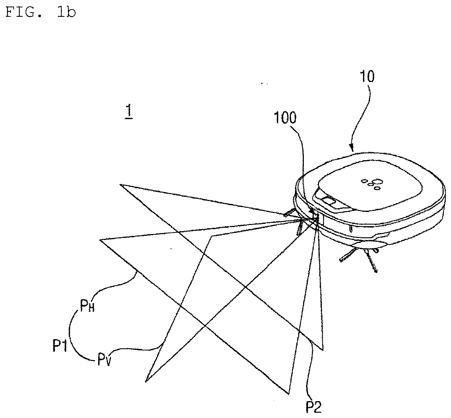

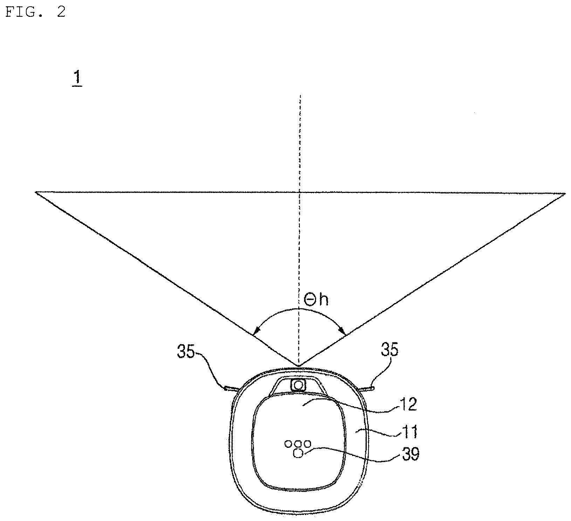

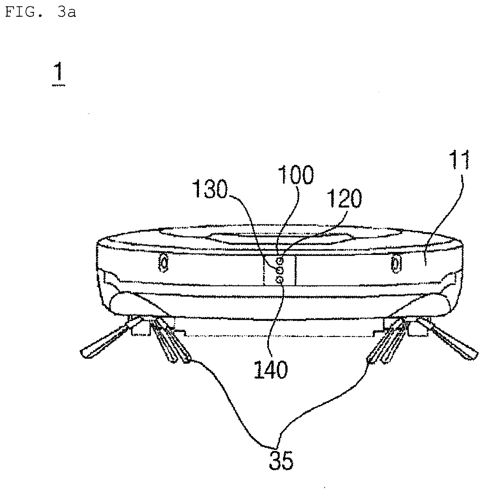

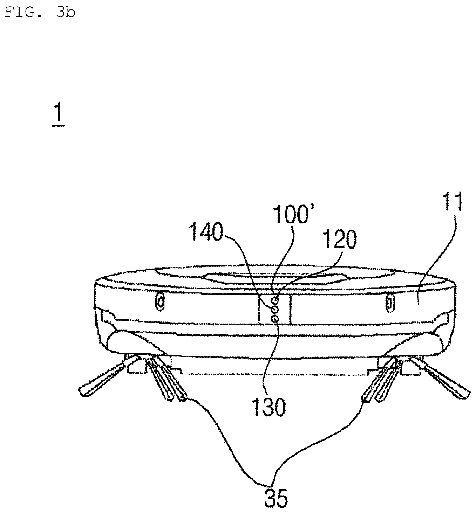

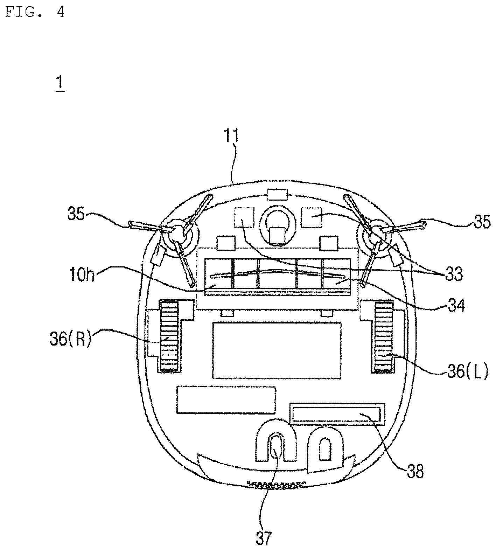

FIG. 1a is a perspective view of a mobile robot according to an embodiment of the present invention, FIG. 1b is a perspective view of a mobile robot according to another embodiment of the present invention, FIG. 2 is a view showing a horizontal angle of view of the mobile robot of FIG. 1, FIG. 3a is a front view of the mobile robot of FIG. 1a, FIG. 3b is a front view of the mobile robot of FIG. 1b, and FIG. 4 is a view showing the bottom of the mobile robot of FIG. 1.

Referring to FIGS. 1 to 4, the mobile robot 1 of the present invention may include a main body 10 traveling on the floor in a cleaning area and sucking in foreign materials such as dust on the floor and an obstacle sensing unit 100 disposed on a front surface of the main body 10.

The main body 10 may include a casing 11 forming appearance thereof and forming a space in which parts configuring the main body 10 are accommodated, a suction unit 34 disposed in the casing 11 to suck in foreign materials such as dust or trash, and a left wheel 36(L) and a right wheel 36(R) rotatably provided in the casing 11. As the left wheel 36(L) and the right wheel 36(R) rotate, the main body 10 moves on the floor of the cleaning area, thereby sucking in foreign materials through the suction unit 34.

The suction unit 34 may include a cleaning roller or brush, a suction fan (not shown) for generating suction force and a suction port 10h, through which airflow generated by rotation of the suction fan is sucked. The suction unit 34 may include a filter (not shown) for filtering out foreign materials from the airflow sucked through the suction port 10h and a foreign material collection box (not shown) for collecting the foreign materials filtered out by the filter.

In addition, the main body 10 may include a driver 300 (or a travel module) for driving the left wheel 36(L) and the right wheel 36(R) . The driver may include at least one driving motor. The at least one driving motor may include a left wheel driving motor for rotating the left wheel 36(L) and a right wheel driving motor for rotating the right wheel 36(R).

The left wheel driving motor and the right wheel driving motor are independently controlled by a driving controller of the controller, such that the main body 10 moves forward or backward or turns. For example, when the main body 10 moves forward, the left wheel driving motor and the right wheel driving motor rotate in the same direction. However, when the left wheel driving motor and the right wheel driving motor rotate at different speeds or in opposite directions, the travel direction of the main body 10 may be changed. At least one auxiliary wheel 37 for stable support of the main body 10 may be further included.

The main body 10 is located at the front side of the bottom of the casing 11 and may further include a plurality of brushes having a plurality of bristles extending in a radial direction. Dust is removed from the floor of the cleaning area by rotation of the plurality of brushes 35, and the dust removed from the floor is sucked through the suction port 10h to be collected in the collection box.

The main body 10 further includes a control panel 39 provided on an upper surface of the casing 11 to receive various commands for control of the mobile robot 1 from a user.

The obstacle sensing unit 100 (or an obstacle sensing module) may be disposed on the front surface of the main body 10.

The obstacle sensing unit 100 may be disposed on the front surface of the main body 10.

The obstacle sensing unit 100 is fixed to the front surface of the casing 11 and includes a first pattern emission unit 120, a second pattern emission unit 130 and an image obtainer 140.

The pattern light emitted by first pattern emission unit 120 and the second pattern emission unit 130 may be emitted with different patterns as shown in FIGS. 1a and 1b. The first and second pattern emission units of FIGS. 1a and 1b are denoted by the same reference numerals. The shapes of the emitted patterns are not limited to the drawings.

As shown in FIG. 1a, the first pattern emission unit 120 emits light of a first pattern P1 (hereinafter referred to as first pattern light) toward the front lower side of the main body 10. The second pattern emission unit 120 emits light of a second pattern P2 (hereinafter referred to as second pattern light) toward the front upper side of the main body. The first pattern light and the second pattern light are horizontally irradiated onto the floor or the obstacle in the form of a straight line.

In addition, as shown in FIG. 1b, the first pattern emission unit 120 may emit light of an eleventh pattern P11 (hereinafter referred to as eleventh pattern light) toward the front lower side of the main body 10. Accordingly, the eleventh pattern light P11 may be emitted toward the floor of the cleaning area. The eleventh pattern light P11 may be configured in a cross pattern in which a horizontal line Ph and a vertical line Pv cross each other.

The second pattern emission unit 120 emits light of a twelfth pattern P12 (hereinafter referred to as twelfth pattern light) toward the front upper side of the main body. The twelfth pattern light is horizontal to the horizontal line Ph of the eleventh pattern light in the form of a straight line.

As shown in FIG. 3a, in the obstacle sensing unit 100 according to the first embodiment, the image obtainer 140 may be disposed below the first pattern emission unit 120 and the second pattern emission unit 130 in a line.

In addition, as shown in FIG. 3b, in an obstacle sensing unit 110' according to the second embodiment, the image obtainer 140 is disposed between the first pattern emission unit 120 and the second pattern emission unit 130 in a line. The image obtainer 140 may be disposed in the middle between the first pattern emission unit 120 and the second pattern emission unit, that is, at the same distance from the first pattern emission unit and the second pattern emission unit.

In the obstacle sensing units according to the first and second embodiments, the shapes of the patterns emitted by the first pattern emission unit and the second pattern emission unit may be any one of the straight pattern of FIG. 1a or the cross pattern of FIG. 1b.

In another example, one or more obstacle sensing units may be further provided on any one of the upper surface, the side surface or the bottom surface of the main body 10 in addition to the front surface of the main body 10.

The first pattern emission unit and the second pattern emission unit of the obstacle sensing unit may be separately provided or may be configured as one module. For example, a lens, a splitter, a mirror or a part for transmitting a light pattern may be provided in the pattern emission unit and thus one pattern emission unit may emit a first light pattern and a second light pattern.

As shown in FIG. 4, a rechargeable battery 38 is provided in the main body 10. A charging terminal 33 of the battery 38 is connected to a commercial power supply (e.g., a home power outlet) or the main body 10 is docked with a charging stand (not shown) connected to the commercial power supply to electrically connect the charging terminal 33 to the commercial power supply, thereby charging the battery 38. Electric parts configuring the mobile robot 1 may receive power from the battery 38. Therefore, when the battery 38 is charged, the mobile robot 1 may autonomously move in a state of being electrically disconnected from the commercial power supply.

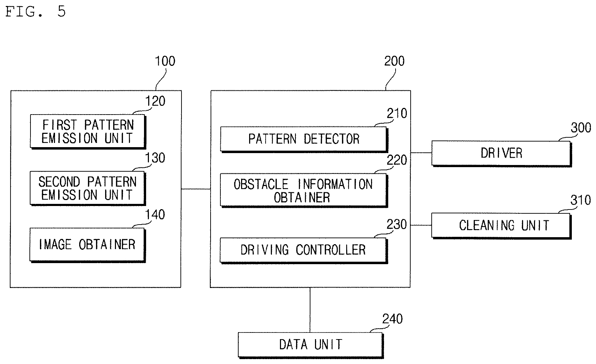

FIG. 5 is a block diagram showing main portions of the mobile robot of FIG. 1.

The mobile robot 1 includes a driver 300, a cleaning unit 310, a data unit 240, an obstacle sensing unit 100 and a controller 200 for controlling overall operations.

The controller 200 may be implemented by one or more processors or a hardware device.

The controller 200 may include a driving controller 230 for controlling the driver 300. The driving controller 230 independently controls operations of the left wheel driving motor and the right wheel driving motor such that the main body 10 moves straight or rotates.

In addition, the controller 200 includes a pattern detector 210 for analyzing data received from the obstacle sensing unit 100 and detecting a pattern and an obstacle information obtainer 220 for determining an obstacle from the pattern.

The pattern detector 210 detects light patterns P1 and P2 from an image (obtained image) obtained by the image obtainer 140. Hereinafter, although the light patterns created by the first and second pattern lights P1 and P2 of FIG. 1a are described as an example, the same is true of the light pattern created by the eleventh and twelfth pattern lights of FIG. 1b.

The pattern detector 210 may detect features such as dots, lines or surfaces of predetermined pixels configuring the obtained image and detect the light patterns P1 and P2 and dots, lines and surfaces configuring the light patterns P1 and P2 based on the detected features.

The obstacle information obtainer 220 determines whether an obstacle is present or the shape of the obstacle based on the pattern detected by the pattern detector 210.

The driver 300 includes at least one driving motor such that the mobile robot 1 travels according to a control command of the driving controller 230. The driver 300 may include the left wheel driving motor for rotating the left wheel 36(L) and the right wheel driving motor for rotating the right wheel 36(R).

The cleaning unit 310 operates the brushes to allow dust or foreign materials around the mobile robot 1 be easily sucked and operates a suction device to suck in dust or foreign materials. The cleaning unit 310 controls operation of the suction fan provided in the suction unit 34 for sucking in foreign materials such as dust or trash such that dust is sucked into a foreign material collection box through a suction port.

The data unit 240 stores the obtained image received from the obstacle sensing unit 100, reference data used for the obstacle information obtainer 220 to determine an obstacle, and information on the detected obstacle. In addition, the data unit 240 may store control data for controlling operation of the mobile robot 1 and data according to the cleaning mode of the mobile robot 1 and may store a map generated therein or received from the outside.

In addition, the data unit 240 stores data capable of being read by a microprocessor and may include a hard disk drive (HDD), a solid state drive (SSD), a silicon disk drive (SDD), a read only memory (ROM), a random access memory (RAM), a CD-ROM, a magnetic tape, a floppy disk, and a data storage device.

The obstacle sensing unit 100 includes a first pattern emission unit 120, a second pattern emission unit 130 and an image obtainer 140.

In the obstacle sensing unit 100, the first pattern emission unit 120, the second pattern emission unit 130 and the image obtainer 140 are provided on the front surface of the main body 10 as described above, thereby emitting lights P1 and P2 of the first and second patterns to the front side of the mobile robot 1, capturing the emitted lights of the patterns and obtaining an image.

The controller 200 stores the obtained image in the data unit 240, and the pattern detector 210 analyzes the obtained image and extracts a pattern. That is, the pattern detector 210 extracts a light pattern appearing by emitting the light of the pattern from the first pattern emission unit or the second pattern emission unit to the floor or the obstacle. The obstacle information obtainer 220 determines an obstacle based on the extracted light pattern.

The controller 200 determines the obstacle through the obtained image received from the obstacle sensing unit 100 and controls the driver 300 to change the movement direction or the travel route, thereby avoiding the obstacle.

When the obstacle is a cliff, the mobile robot 1 may fall. Therefore, the controller 200 senses the cliff through the obtained image and controls a cliff sensor (not shown) to check whether a cliff is present again, thereby controlling travel to prevent the mobile robot from falling. If the cliff is present, the controller 200 determines pattern change through the obtained image and controls the driver 300 to travel along the edge thereof.

In addition, when a plurality of obstacles is present in an area having a predetermined size or less and the mobile robot is restricted, the controller 200 determines whether the mobile robot 1 is in a restriction situation and sets an escape mode for enabling the mobile robot to escape from the restriction situation.

The controller 200 sets the escape route based on information on peripheral obstacles depending on whether a currently set mode is a basic mode or a quick cleaning mode, such that the mobile robot 1 escapes from the restriction situation.

The controller 200 may acquire information on all peripheral obstacles, generate a peripheral area map and then set an escape route, in the basic mode. In addition, the controller may determine whether entry is possible according to a distance between sensed obstacles and set an escape route, in the quick cleaning mode.

The controller 200 analyzes the pattern of the obtained image with respect to the detected obstacles, determines the distance between the obstacles, determines that travel or entry is possible when the distance between the obstacles is equal to or greater than a predetermined value, and performs control such that the mobile robot escapes from the restriction situation.

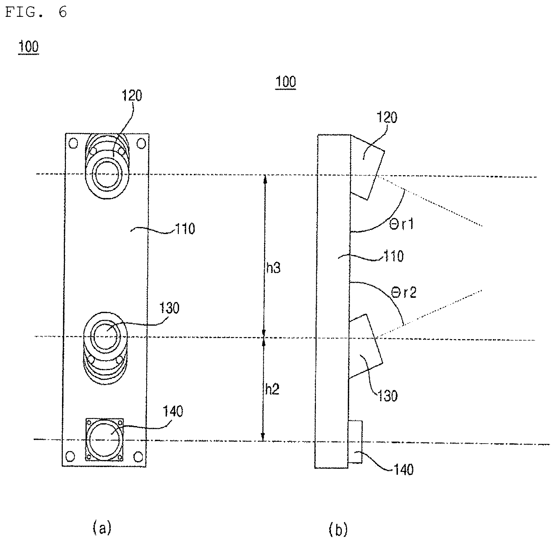

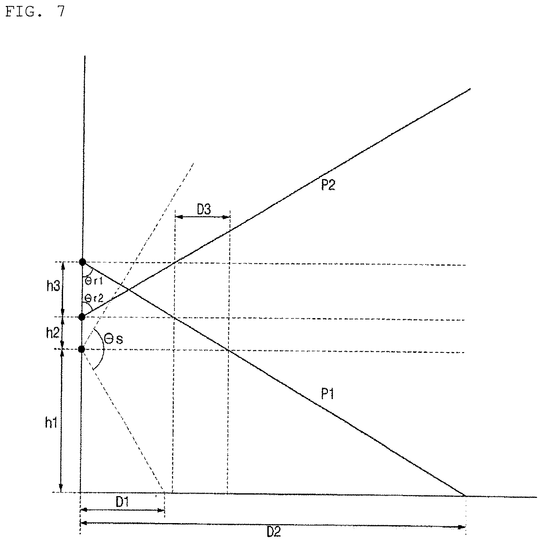

FIG. 6 is a front view and a side view of an obstacle sensing unit according to a first embodiment, and FIG. 7 is a view showing a pattern emission range and an obstacle detection range of the detector of the obstacle sensing unit of FIG. 6. (a) of FIG. 6 is the front view of the obstacle sensing unit and (b) of FIG. 6 is the side view of the obstacle sensing unit.

As shown in (a) and (b) of FIG. 6, in the obstacle sensing unit 100 according to the first embodiment, each of the first and second pattern emission units 120 and 130 may include a light source and a light pattern projection element (OPPE) for generating a predetermined pattern by transmitting light emitted from the light source. The light source may be a laser diode (LD), a light emitting diode (LED), etc. Laser light has superior monochromaticity, straightness and connection characteristics to the other light sources and enables accurate distance measurement. In particular, since infrared light or visible light has a significant variation in distance measurement accuracy according to the color and material of an object, a laser diode is preferably used as the light source. The OPPE may include a lens and a diffractive optical element (DOE). Light of various patterns may be emitted according to the configuration of the OPPE provided in each of the pattern emission units 120 and 130.

The first pattern emission unit 120 may emit the first pattern light P1 toward the front lower side of the main body 10. Accordingly, the first pattern light P1 may be irradiated onto the floor of the cleaning area.

The first pattern light P1 may be formed in the form of a horizontal line.

In addition, the first pattern light P1 may be formed in the form of a cross pattern in which a horizontal line and a vertical line cross each other.

The first pattern emission unit 120, the second pattern emission unit 130 and the image obtainer 140 may be vertically arranged in a line. The image obtainer 140 may be disposed below the first pattern emission unit 120 and the second pattern emission unit 130 without being limited thereto and may be disposed above the first pattern unit and the second pattern unit.

In the embodiment, the first pattern emission unit 120 is located on the upper side to emit the first pattern light P1 forward and downward, thereby detecting an obstacle located under the first pattern emission unit 120. The second pattern emission unit 130 is located below the first pattern emission unit 120 to emit the second pattern light P2 forward and upward. Accordingly, the second pattern light P2 may be irradiated onto a wall, an obstacle located at least at a higher position than the second pattern emission unit 130 from the floor of the cleaning area, or a portion thereof.

The second pattern light P2 has a pattern different from that of the first pattern light P1 and preferably includes a horizontal line. Here, the horizontal line is not necessarily a continuous line but may be a dotted line.

Meanwhile, the emission angle θh shown in FIG. 2 is the horizontal emission angle of the first pattern light P1 emitted from the first pattern emission unit 120 and indicates an angle between lines connecting the first pattern emission unit 120 with both ends of the horizontal line, which is preferably in a range of 130° to 140° without being limited thereto. A dotted line shown in FIG. 2 is directed to the front side of the mobile robot 1 and the first pattern light P1 may be configured to be symmetrical with respect to the dotted line. Since the first pattern light and the second pattern light are separated from the main body 10 by a predetermined distance, the emission angle θh may be horizontally formed. When light is irradiated onto the obstacle, the light pattern may be analyzed and a distance between the main body and the obstacle may be determined based on the position of the light pattern and the distance between the main body and the pattern.

In the second pattern emission unit 130, similarly to the first pattern emission unit 120, the horizontal emission angle is preferably in a range of 130° to 140°. In some embodiments, the pattern light P2 may be emitted at the same horizontal emission angle as the first pattern emission unit 120. In this case, the second pattern light P1 may also be configured to be symmetrical with respect to the dotted line shown in FIG. 2.

The image obtainer 140 may obtain the image of the front side of the main body 10. The front side refers to a travel direction of the main body, that is, a direction in which the main body emits the light pattern. In particular, the pattern lights P1 and P2 appear on an image (hereinafter referred to as an obtained image) obtained by the image obtainer 140. Hereinafter, the images of the pattern lights P1 and P2 appearing in the obtained image are referred to as light patterns. Since the pattern lights P1 and P2 irradiated into the actual space are images formed on the image sensor, the pattern lights are denoted by reference numerals P1 and P2 and the images respectively corresponding to the first pattern light P1 and the second pattern light P2 are referred to as the first light pattern P1 and the second light pattern P2.

The image obtainer 140 may include a digital camera for converting the image of a subject into an electrical signal, converting the electrical signal into a digital signal, and storing the digital signal in a memory device, and the digital camera may include an image sensor (not shown) and an image processor (not shown).

The image sensor is a device for converting an optical image into an electrical signal and is composed of a chip in which a plurality of photodiodes is integrated. Examples of the photodiode include a pixel. Charges are accumulated in pixels by an image formed on a chip by light passing through a lens, and are converted into an electrical signal (e.g., a voltage). Examples of the image sensor include a charge coupled device (CCD), a complementary metal oxide semiconductor (CMOS), etc.

The image processor generates a digital image based on an analog signal output from the image sensor. The image processor may include an A/D converter for converting the analog signal into a digital signal, a buffer for temporarily storing digital data according to the digital signal output from the A/D converter, and a digital signal processor (DSP) for processing the data stored in the buffer to configure the digital image.

The pattern detector 210 may detect features such as dots, lines and surfaces of predetermined pixels configuring the obtained image and detect the light patterns P1 and P2 and the dots, lines and surfaces configuring the light patterns P1 and P2 based on the detected features.

For example, the pattern detector 210 may extract lines composed of successively brighter pixels to extract a horizontal line configuring the first light pattern P1 and a horizontal line configuring the second light pattern P2.

However, the present invention is not limited thereto and various methods of extracting a pattern having a desired shape from the digital image are already known. The pattern detector 210 may extract the first light pattern P1 and the second light pattern P2 using known techniques.

As shown in FIG. 7, the first pattern emission unit 120 and the second pattern emission unit 130 may be symmetrically disposed. The first pattern emission unit 120 and the second pattern emission unit 130 may be vertically disposed to be separated from each other by a distance h3, such that the first pattern emission unit emits the first pattern light downward and the second pattern emission unit emits the second pattern light upward. Therefore, the pattern lights cross each other.

The image obtainer 140 is located at a distance h2 from the second pattern emission unit to capture the image of the front side of the main body 10 at an angle of view θs in the vertical direction. The image obtainer 140 is installed at a distance h1 from the floor. The image obtainer 140 may be installed at a position where capturing of the front side of the main body is not interrupted, in consideration of a bumper (not shown) configuring the lower end of the front surface of the main body 10 of the mobile robot 1 or the shape of the driving or cleaning structure.

The first pattern emission unit 120 or the second pattern emission unit 130 is installed such that the directions of the optical axes of the lenses configuring each pattern emission unit 120 or 130 form a certain emission angle.

The first pattern emission unit 120 emits the first pattern light P1 downward at a first emission angle θr1, and the second pattern emission unit 130 emits the second pattern light P2 upward at a second emission angle θr2. At this time, the first emission angle and the second emission angle may be different but may be the same in some cases. The first emission angle and the second emission angle may be in a range of 50° to 75°, without being limited thereto. For example, the first emission angle may be set to 60° to 70° and the second emission angle may be set to 50° to 55°. The first and second emission angles may be changed according to the structure of the lower bumper of the mobile robot 1, the detecting distance of a lower object, and the height of an upper object to be detected.

When the pattern lights emitted from the first pattern emission unit 120 and the second pattern emission unit 130 are irradiated onto an obstacle, the positions of the light patterns P1 and P2 in the obtained image are changed according to the distance from the first pattern emission unit 120 to the obstacle. For example, when the first pattern light P1 and the second pattern light P2 are irradiated onto a predetermined obstacle, the height of the first light pattern P1 in the obtained image increases as the distance between the obstacle and the mobile robot 1 decreases, and decreases as the distance between the obstacle and the mobile robot 1 increases. That is, the distance from the obstacle corresponding to a row (line composed of pixels arranged in a lateral direction) configuring the image generated by the image obtainer 140 may be pre-stored and the position of the obstacle may be estimated based on the distance from the obstacle corresponding to the row when the light patterns P1 and P2 detected in the image obtained through the image obtainer 140 are detected in a predetermined row.

The image obtainer 140 is aligned such that the optical axis of the lens is oriented in a horizontal direction. θs shown in FIG. 7 indicates the angle of view of the image obtainer 140, and is set to a value of 100° or more and is preferably in a range of 100 ° to 110°, without being limited thereto.

In addition, the distance from the floor of the cleaning area to the image obtainer 140 may be set to about 60 mm to 70 mm. In this case, the floor of the cleaning area in the image obtained by the image obtainer 140 appears at a distance D1 or more from the image obtainer, and D2 denotes a position where the first light pattern P1 is displayed on the floor appearing in the obtained image. At this time, if an obstacle is located at D2, an image in which the first light pattern P1 is irradiated onto the obstacle may be obtained by the image obtainer 140. When the obstacle becomes closer to the mobile robot 1 than D2, the first light pattern is displayed on an upper side of a reference position ref1 in correspondence with the irradiated first pattern light P1.

The reference position ref1 is a position where the first light pattern is displayed when the main body 10 is located on a flat floor and may be set to a position where the first light pattern is captured through the image obtainer when the first light pattern is irradiated onto D2. The reference position is used to determine whether an obstacle is not present ahead and the floor is flat, that is, the floor is in a normal state.

Here, the distance from the main body 10 to D1 is preferably is 100 mm to 150 mm, the distance from the main body 10 to D2 is preferably 180 mm to 280 mm, without being limited thereto. Meanwhile, D3 indicates a distance from a protruding portion of the front surface of the main body to a position where the second pattern light is irradiated. Since the main body detects an obstacle while moving, D3 is a minimum distance where the obstacle located ahead (on the upper side) may be detected without colliding with the obstacle. D3 may be set to about 23 mm to 30 mm.

Meanwhile, the obstacle information obtainer 220 determines that a cliff is present in the vicinity of the mobile robot 1, when the first light pattern P1 displayed in the obtained image disappears in the normal state or when only a portion of the first light pattern is displayed, while the main body 10 travels.

The obstacle information obtainer 220 may recognize a cliff located at the front side of the mobile robot 1, when the first light pattern is not displayed in the obtained image. If a cliff (e.g., a staircase) is present at the front side of the mobile robot 1, since the first pattern light is not irradiated onto the floor, the first light pattern P1 disappears from the obtained image.

The obstacle information obtainer 220 may determine that a cliff is present at a distance D2 ahead of the main body 10 based on D2. At this time, if the first pattern light P1 has a cross shape, the horizontal line disappears and only the vertical line is displayed, thereby determining that the cliff is present.

In addition, if a portion of the first light pattern is not displayed, the obstacle information obtainer 220 may determine that a cliff is present at the left or right side of the mobile robot 1. If the right portion of the first light pattern is not displayed, it may be determined that a cliff is present on the right side.

Accordingly, the driving controller 230 may control the driver 300 based on the information on the cliff determined by the obstacle information obtainer 220, such that the mobile robot 1 travels without falling from the cliff.

In addition, if a cliff is present ahead, the driving controller 230 may move forward by a predetermined distance, e.g., D2 or less and checks whether a cliff is present again using a cliff sensor installed at a lower portion of the main body. The mobile robot 1 may primarily check presence of the cliff through the obtained image and secondarily check presence of the cliff through the cliff sensor after traveling by the predetermined distance.

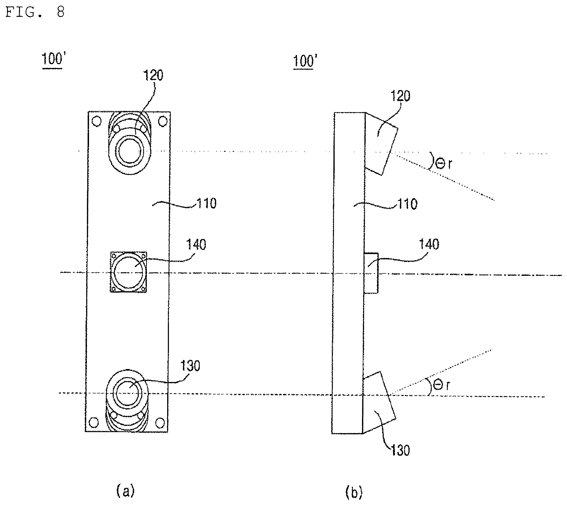

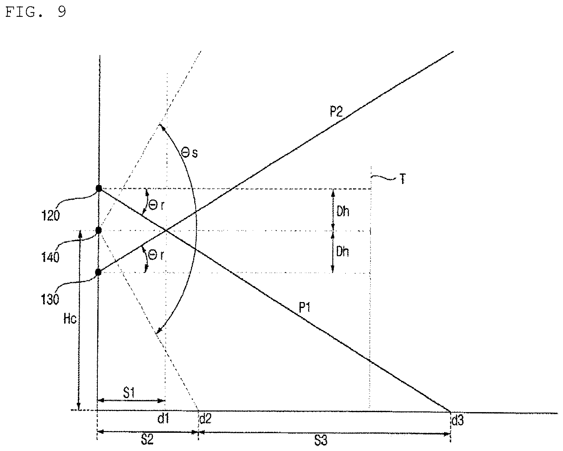

FIG. 8 is a front view and a side view of an obstacle sensing unit according to a second embodiment, FIG. 9 is a view showing a pattern emission range and an obstacle detection range of the obstacle sensing unit of FIG. 8.

As shown in (a) and (b) of FIG. 8, an obstacle sensing unit 100' according to the second embodiment includes first and second pattern emission units 120 and 130 and an image obtainer 140. The same components as the obstacle sensing unit 100 according to the first embodiment are denoted by the same reference numerals and a detailed description thereof will be omitted.

A module frame 110 fixed to the front surface of a case 11 and extending in a vertical direction may be further included. In some embodiments, the first pattern emission unit 120, the second pattern emission unit 130 and the image obtainer 140 may be directly fixed to the casing 11 without the module frame 110.

In the obstacle sensing unit 100' according to the second embodiment, the first pattern emission unit 120, the image obtainer 140 and the second pattern emission unit 130 may be arranged in a line. Preferably, the image obtainer 140 is disposed between the first pattern emission unit 120 and the second pattern emission unit 130.

The first pattern emission unit 120 located on the upper side emits first pattern light to the front lower side of the main body 10 and the second pattern emission unit 130 located on the lower side emits the second pattern light to the front upper side of the main body 10.

The first pattern light P1 may be irradiated onto the floor of the cleaning area. The second pattern light P2 may be irradiated onto a wall, an obstacle located at least at a position higher than the second pattern emission unit 130 from the floor of the cleaning area, or a portion thereof.

The image obtainer 140 may obtain the image of the front side of the main body 10. In particular, pattern lights P1 and P2 appear on an image (hereinafter referred to as an obtained image) obtained by the image obtainer 140. Hereinafter, the images of the pattern lights P1 and P2 appearing in the obtained image are referred to as light patterns. Since the pattern lights P1 and P2 irradiated into the actual space are images formed on the image sensor, the pattern lights are denoted by reference numerals P1 and P2.

As shown in FIG. 9, in the obstacle sensing unit 100' according to the second embodiment, the first pattern emission unit 120 may be located at a distance Dh upwardly from the image obtainer 140, and the second pattern emission unit 130 may be located at the same distance Dh downwardly from the image obtainer 140. Hereinafter, an angle between the emission direction of the first pattern emission unit 120 or the second pattern emission unit 130 and the horizontal line is referred to as a vertical emission angle. Specifically, the vertical emission angle may be defined as an angle between the directions of the optical axes of the lenses configuring each pattern emission unit 120 or 130 and the horizontal line.

The first vertical emission angle of the first pattern emission unit 120 and the second vertical emission angle of the second pattern emission unit 130 may both be equal to θr. However, the first pattern emission unit 120 may emit the first pattern light P1 at an upward angle θr from the horizontal line, and the second pattern emission unit 130 may emit the second pattern light P2 at a downward angle θr from the horizontal line. θr may be in a range of 20° to 30° without being limited thereto.

The first pattern emission unit 120 and the second pattern emission unit 130 are disposed to be symmetrical with respect to the image obtainer 140, and the first pattern emission unit 120 and the second pattern emission unit 130 are configured to emit light at the vertical emission angle θr in opposite directions.

Such a symmetrical structure makes it easy to perform calibration or product initialization. When light emitted from the first pattern emission unit 120 or the second pattern emission unit 130 is irradiated onto the obstacle, the positions of the light patterns P1 and P2 in the obtained image are changed according to the distance between the obstacle and the first pattern emission unit 120. For example, when the first pattern light P1 and the second pattern light P2 are irradiated onto a predetermined obstacle, the height of the first light pattern P1, particularly, the horizontal pattern Ph in the obtained image increases as the distance between the obstacle and the mobile robot 1 decreases and decreases as the distance between the obstacle and the mobile robot 1 increases. That is, the distance from the obstacle corresponding to a row (line composed of pixels arranged in a lateral direction) configuring the image generated by the image obtainer 140 may be pre-stored and the position of the obstacle may be estimated based on the distance from the obstacle corresponding to the row when the light patterns P1 and P2 detected in the image obtained through the image obtainer 140 are detected in a predetermined row.

However, in order to accurately perform such a process, the first pattern emission unit 120 and the second pattern emission unit 130 need to be aligned to accurately emit light at the predetermined vertical emission angle θr. Whether the first pattern emission unit 120 and the second pattern emission unit 130 are aligned may be determined through a calibration process. Calibration may be performed through the following process.

A vertical incident plate T (see FIG. 7) for fixing the obstacle sensing unit 100' and having a plane facing the obstacle sensing unit 100' at a predetermined distance ahead of the obstacle sensing unit 100' is installed. The position of the incident plate T is preferably a position where the first pattern light P1 is irradiated.

In this case, the first pattern emission unit 120 emits light and the image obtainer 140 obtains an image. The first light pattern P1 irradiated onto the incident plate T appears in the obtained image. Since the distance from the obstacle sensing unit 100 to the incident plate T is already known, if the obstacle sensing unit 100' is normally manufactured, the horizontal line Ph of the first light pattern P1 is displayed at a predetermined position ref1 (hereinafter referred to as a reference position) in the obtained image.

When the emission direction of the second pattern emission unit 130 is examined, the above-described calibration may be repeated after turning the obstacle sensing unit 100' upside down. That is, after the second pattern emission unit 130 is located above the image obtainer 140 by turning the obstacle sensing unit 100' upside down, the second pattern emission unit 130 emits light and the image obtainer 140 obtains an image in which the second light pattern P2 formed on the incident plate T appears. In this case, if the second pattern emission unit 130 is normal, the second light pattern P2 is detected at the reference position ref1. Meanwhile, the image obtainer 140 is aligned such that the optical axis of the lens is oriented in a horizontal direction. θr indicates the angle of view of the image obtainer 140, and is set to a value of 100° or more and is preferably in a range of 100 ° to 110°, without being limited thereto.

Such a calibration process is equally applicable to the obstacle sensing unit 100 of the first embodiment.

In addition, the distance from the floor of the cleaning area to the image obtainer 140 may be set to about 145 mm to 155 mm. In this case, the floor of the cleaning area in the image obtained by the image obtainer 140 appears at a distance d2 or more, and S2 indicates an area to a position d3 of the center (intersection point between the horizontal line Ph and the vertical line Pv) of the first light pattern P1 in the floor appearing in the obtained image. In particular, if an obstacle is located in the area S2, an image in which the first pattern light P1 is irradiated onto the obstacle may be obtained by the image obtainer 140. The distance from the main body 10 to d2 is set to 100 mm to 120 mm and d3 is located at a distance of 400 mm from the mobile robot 1, without being limited thereto.

In addition, S1 (area from the mobile robot 1 to d1) shown in FIG. 9 indicates an area where the positions of the first light pattern P1 and the second light pattern P2 are reversed. If an obstacle is located in the area S1, the first pattern light P1 is located above the second pattern light P2 in the obtained image. At this time, d1 is preferably a position separated from the mobile robot 1 by 70 mm to 80 mm, without being limited thereto.

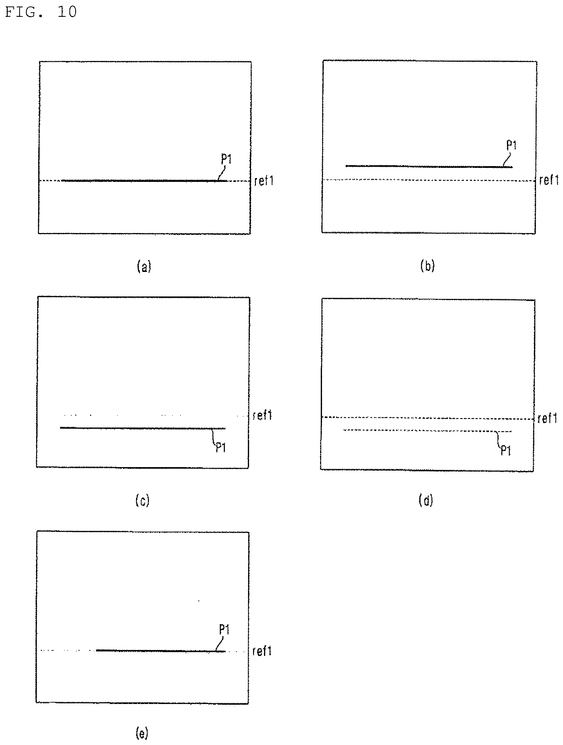

FIG. 10 is a view showing the light of the pattern emitted by the first pattern emission unit of FIG. 1a.

When the obtained image is input, the pattern detector 210 detects and supplies the first light pattern or the second light pattern from the obtained image received from the image obtainer 140 to the obstacle information obtainer 220.

The obstacle information obtainer 220 analyzes the first light pattern or the second light pattern detected from the obtained image and compares the position of the first light pattern with the reference position ref1 to determine an obstacle.

As shown in (a) of FIG. 10, if the horizontal line of the first light pattern P1 is located at the reference position ref1, a normal state is determined. The normal state means that the floor is flat and an obstacle is not present ahead and thus the mobile robot may continuously travel.

Since the second light pattern P2 is irradiated onto the obstacle to appear on the obtained image when an obstacle is present at the front upper side of the mobile robot, the second light pattern P2 does not generally appear in the normal state.

As shown in (b) of FIG. 10, if the horizontal line of the first light pattern P1 is located above the reference position ref1, the obstacle information obtainer 220 determines that an obstacle is present ahead.

When an obstacle is detected through the obstacle information obtainer 220, the driving controller 230 controls the driver 300 to avoid the obstacle. Meanwhile, the obstacle information obtainer 220 may determine the position and size of the detected obstacle according to the positions of the first light pattern P1 and the second light pattern and whether the second light pattern is displayed. In addition, the obstacle information obtainer 220 may determine the position and size of the obstacle according to change of the first light pattern and the second light pattern displayed in the obtained image while traveling.

The driving controller 230 determines whether the mobile robot is capable of continuously travel toward the obstacle or avoiding the obstacle based on information on the obstacle received from the obstacle information obtainer 220 and controls the driver 300. For example, if the height of the obstacle is equal to or less than a certain height or if the mobile robot is capable of entering a space between the obstacle and the floor, the driving controller 230 determines that the mobile robot is capable of continuously traveling.

As shown in (c) of FIG. 10, the first light pattern P1 may be displayed at a lower position than the reference position ref1. If the first light pattern P1 appears at a lower position than the reference position, the obstacle information obtainer 220 determines that a downward slope is present. In the case of a cliff, since the first light pattern P1 disappears, the downward slope may be distinguished from the cliff.

As shown in (d) of FIG. 10, the obstacle information obtainer 220 determines that a cliff is present in the travel direction if the first light pattern is not displayed.

In addition, as shown in (e) of FIG. 10, if a portion of the first light pattern is not displayed, the obstacle information obtainer 220 may determine that a cliff is present on the left or right side. In this case, the obstacle information obtainer 220 determines that a cliff is present on the left side of the main body 10.

Meanwhile, if the first light pattern P1 has a cross shape, an obstacle may be determined in consideration of both the position of the horizontal line and the length of the vertical line.

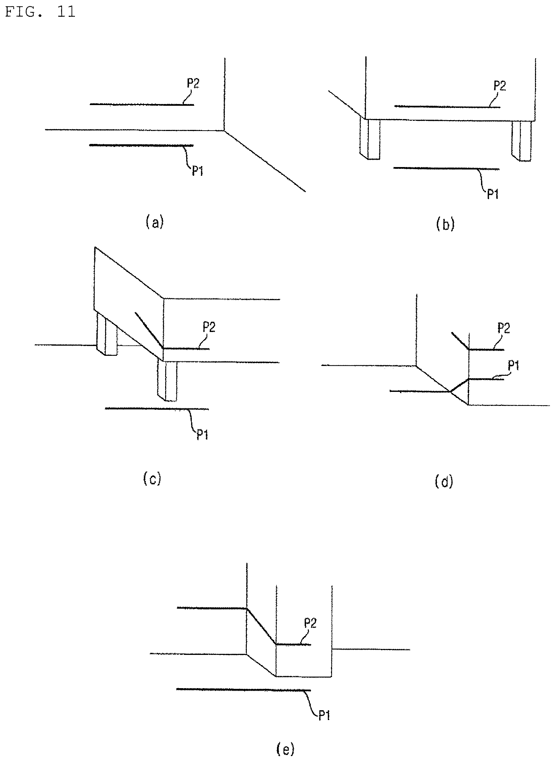

FIG. 11 is a view showing the shape of a pattern irradiated onto an obstacle in the mobile robot of FIG. 1a.

As shown in FIG. 11, as the pattern light emitted from the obstacle sensing unit 100 may be irradiated onto an obstacle such that the light pattern appears in the obtained image, the obstacle information obtainer 220 may determine the position, size and shape of the obstacle.

As shown in (a) of FIG. 11, if a wall is present ahead while traveling, the first pattern light is irradiated onto the floor and the second pattern light is irradiated onto the wall. In the obtained image, the first light pattern P1 and the second light pattern P2 are displayed as two horizontal lines. At this time, if a distance from the wall is greater than D2, the first light pattern P1 is displayed at the reference position ref1. However, since the second light pattern is displayed, the obstacle information obtainer 220 may determine that an obstacle is present.

Meanwhile, if the distance between the main body 10 and the wall is less than D2, since the first pattern light is irradiated onto the wall instead of the floor, the first light pattern is displayed above the reference pattern ref1 and the second light pattern is displayed above the first light pattern, in the obtained image. Since the display position of the second light pattern decreases as the distance from the obstacle decreases, the second light pattern is displayed at a lower position than the case where the distance between the wall and the main body 10 is greater than D2. The second pattern light is displayed above the reference position and the first light pattern.

Therefore, the obstacle information obtainer 220 may calculate the distance from the wall, as the obstacle, through the first light pattern and the second light pattern.

As shown in (b) of FIG. 11, if an obstacle such as a bed or a drawer is present ahead, the first pattern light P1 and the second pattern light P2 are irradiated onto the floor and the obstacle as two horizontal lines, respectively.

The obstacle information obtainer 220 determines the obstacle based on the first light pattern and the second light pattern. The height of the obstacle may be determined based on the position of the second light pattern and change in the second light pattern appearing while approaching the obstacle. Therefore, the driving controller 230 determines whether the main body is capable of entering a space located under the obstacle and controls the driver 300.

For example, if an obstacle having a predetermined space formed between the floor and the object, such as a bed, is located in the cleaning area, the space may be recognized and the height of the space may be detected to determine whether the mobile robot passes the obstacle or avoids the obstacle. Upon determining that the height of the space is lower than that of the main body 10, the driving controller 230 may control the driver 300 such that the main body 10 avoids the obstacle. In contrast, upon determining that the height of the space is higher than that of the main body 10, the driving controller 230 may control the driver 300 such that the main body 10 enters or passes the space.

At this time, although the first light pattern and the second light pattern are displayed as two horizontal lines even in (a) of FIG. 11, the obstacle information obtainer 220 may distinguish an obstacle type because the distance between the first light pattern and the second light pattern varies. In addition, in (a) of FIG. 11, the first light pattern is displayed above the reference position as the mobile robot approaches the obstacle. In contrast, in the case of the obstacle located on the upper side in (b) of FIG. 11, even if the main body approaches the obstacle, the first light pattern P1 is displayed at the reference position ref1 and the position of the second light pattern P2 is changed. Therefore, the obstacle information obtainer 220 may distinguish the obstacle type.

As shown in (c) of FIG. 11, in the case of the edge of a bed or a drawer, the first pattern light P1 is irradiated onto the floor as a horizontal line. However, the second pattern light P2 is irradiated onto the edge of the obstacle and thus a portion thereof appears as a horizontal line and the other portion thereof appears an oblique line. Since the second light pattern rises as the distance from the main body 10 increases, an oblique line bent upward from the horizontal line appearing on the front surface of the obstacle appears on the side surface of the obstacle.

As shown in (d) of FIG. 11, when the main body 10 approaches the edge of the wall by a predetermined distance or more, a portion of the first pattern light P1 is displayed above the reference position as a horizontal line and another portion of the first pattern light is displayed on the side surface of the edge as an oblique line bent downward, and the remaining portion of the first pattern light is displayed on the floor at the reference position as a horizontal line.

Meanwhile, a portion of the second pattern light is displayed as a horizontal line as shown in (c) of FIG. 11 and the other portion thereof is displayed on the side surface of the edge as an oblique line bent upward.

In addition, as shown in (e) of FIG. 11, in the case of an obstacle protruding from a wall, the first light pattern is displayed at the reference position ref1 as a horizontal line. A portion of the second light pattern P2 is displayed on the protruding surface as a horizontal line, another portion of the second light pattern P2 is displayed on the side surface of the protruding surface as an oblique line bent upward, and the remaining portion of the second light pattern P2 is displayed on the wall as a horizontal line.

Therefore, the obstacle information obtainer 220 determines the position, shape and size (height) of the obstacle based on the positions and shapes of the first pattern light and the second pattern light.

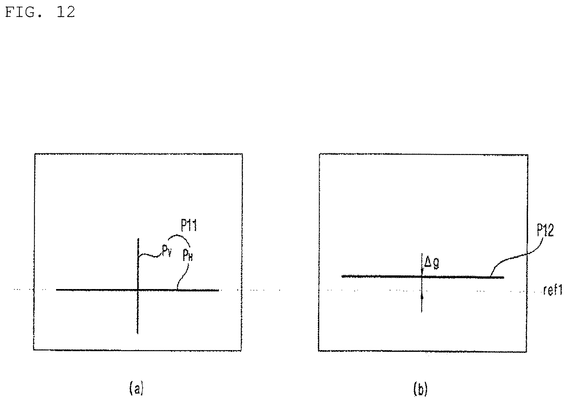

FIG. 12 is a view showing pattern light of FIG. 1b. (a) of FIG. 12 shows the first light pattern P1 displayed on the obtained image and shows the case where the horizontal line Ph is detected at the reference position ref1.

As shown in (b) of FIG. 12, if the second light pattern P2 appears at a distance Δg from the reference position ref1 in the obtained image, the vertical emission angle of the second pattern emission unit 130 is less than a predetermined value θr and thus the vertical emission angle of the second pattern emission unit 130 may be adjusted.

However, if Δg is in a predetermined allowable range, Δg may be stored in a data storage unit, and the position of the second light pattern P2 may be compensated using Δg when a distance from the second light pattern P2 appearing in the obtained image to the obstacle is obtained in the future, thereby more accurately obtaining the distance from the obstacle.

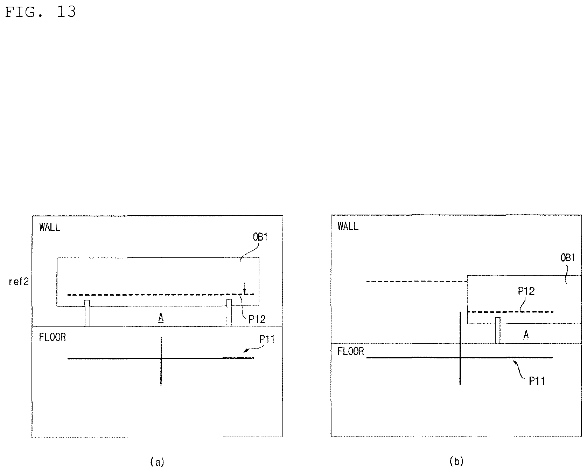

FIG. 13 is a view showing an obtained image according to change in position of the mobile robot of FIG. 1b.

FIG. 13(a) shows an image obtained when a mobile robot is located at a first position and a first obstacle is located ahead and FIG. 13(b) shows an image obtained when the position of the mobile robot is changed to a second position.

When an obstacle OB1, such as a bed, having a predetermined space A formed between the obstacle and a floor is located in a cleaning area, the space A may be recognized and the height of the space A may be detected to determine whether the mobile robot passes or avoids the obstacle OB1.

For example, as shown in (a) of FIG. 13, when eleventh pattern light P11 is irradiated onto the floor located in the space A and twelfth pattern light P12 is irradiated onto a structure located at the upper side of the space A (e.g., a frame supporting the mattress of the bed), the obstacle information obtainer 220 configuring the controller 200 may recognize that an obstacle is located above a portion, onto which the eleventh pattern light P11 is irradiated, and detect a distance from the mobile robot 1 to the obstacle OB1 based on the position of the twelfth light pattern P12 appearing in the obtained image. In addition, since the vertical emission angle of the second pattern emission unit 130 is constant, the height of the portion, onto which the second pattern light P2 is irradiated, from the floor of the cleaning area may be detected based on the distance from the obstacle OB1. Accordingly, based on such information, the obstacle information obtainer 220 may detect the height of the space A. Upon determining that the height of the space A is lower than that of the main body 10, the driving controller 230 may control the driver 300 such that the main body 10 avoids the obstacle OB1. In contrast, upon determining that the height of the space A is higher than that of the main body 10, the driving controller 230 may control the driver 300 such that the main body 10 enters or passes the obstacle OB1.

Meanwhile, as shown in (b) of FIG. 13, when the vertical line Pv of the eleventh pattern light P11 reaches a wall, the horizontal line Ph thereof is irradiated onto the floor, some of the twelfth pattern light P12 is irradiated onto the obstacle OB1 and the remaining twelfth pattern light is irradiated onto the wall, if the second pattern emission unit 130 is not installed, since obstacle information is obtained based only on the eleventh light pattern P11 appearing in the obtained image, it may be determined that the wall is located in front of the mobile robot. However, in the embodiment, since the second pattern emission unit 130 is provided, it may be further determined that the obstacle OB1 is present between the mobile robot 1 and the wall. In particular, since the obstacle OB1 may be detected through the twelfth pattern light P12 including the horizontal line Ph in a horizontally wider area, the obstacle OB1 located in an area where the vertical line Pv of the eleventh pattern light P11 does not reach may be detected.

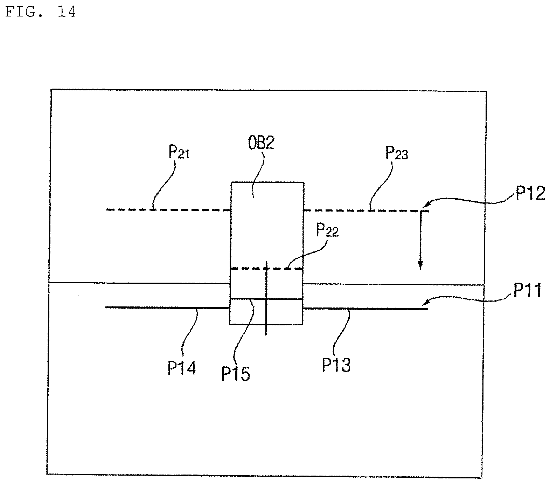

FIG. 14 is a view showing an image obtained by pattern light irradiated onto an obstacle by the mobile robot of FIG. 1b.

Referring to FIG. 14, the mobile robot 1 according to the embodiment of the present invention may detect the three-dimensional shape of the obstacle through the twelfth pattern light P12 in addition to the obstacle information obtained through the eleventh pattern light P11. For example, although the actual height of the obstacle OB2 is too high and thus the mobile robot 1 may not move over the obstacle OB2, since the eleventh light pattern P11 is irradiated onto the lower region of the obstacle at the current position of the mobile robot 1, if the second pattern emission unit 130 is not installed, the driving controller 230 may determine that the main body 10 may move over the obstacle OB2 and control the main body 10 to move toward the obstacle OB2. Thereafter, when the position of the twelfth light pattern P12 on the obtained image gradually increases as the main body 11 approaches the obstacle OB2, the driving controller may determine that the main body 10 may not move over the obstacle OB2 due to the height of the obstacle OB2 and control the driver 300 to avoid the obstacle OB2.

In contrast, in the embodiment, if the second pattern emission unit 130 is provided, since the twelfth pattern light P12 is irradiated onto the obstacle OB2 at the current position, it is possible to detect the height of the obstacle OB2 in advance and thus to optimize the travel route in advance.

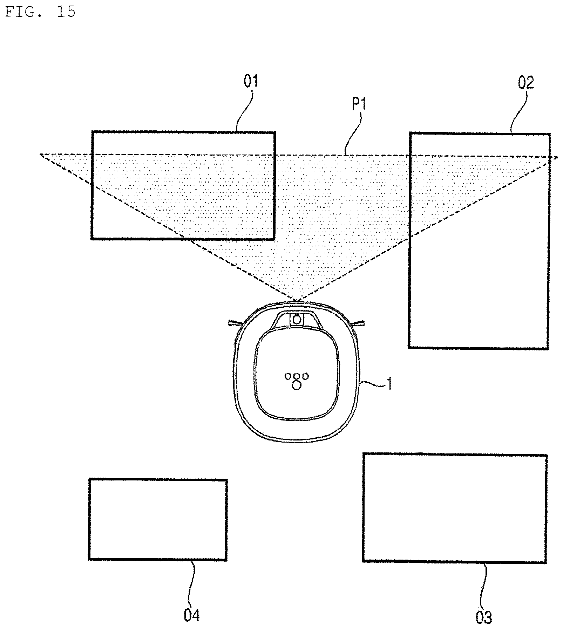

Meanwhile, the obstacle information obtainer 220 may recognize a cliff located in front of the mobile robot based on the length of the vertical line Pv appearing in the obtained image. If the cliff (e.g., staircase) is located in front of the mobile robot 1, the front end of the vertical line Pv may reach the bottom of the cliff and a portion of the light irradiated onto the bottom of the cliff does not appear on the obtained image. Therefore, the length of the vertical line Pv appearing in the obtained image is shortened. Accordingly, the obstacle information obtainer 220 may recognize that the cliff is located in front of the mobile robot 1 and the driving controller 230 may control the driver 300 such that the mobile robot 1 travels without falling from the cliff. In addition, if portions (P13 to P15) of the horizontal line Ph do not appear on the obtained image, it may be recognized that the cliff is located on the left or right side of the main body. FIG. 15 is a view referenced to describe a restriction situation of a mobile robot according to an embodiment of the present invention.

As shown in FIG. 15, a mobile robot 1 may enter an area where a plurality of obstacles 01 to 04 is present. For example, the mobile robot 1 enters an area having a predetermined size or less and surrounded by legs of a chair or a table and an obstacle placed on a floor, such as under a char or under a table, thereby being restricted due to peripheral obstacles.

The mobile robot 1 emits a light pattern P1 to analyze the pattern of an image received from the obstacle sensing unit 100, determines presence of the obstacle and the position of the obstacle, and travels while avoiding the obstacle.

If the plurality of obstacles is placed adjacent to each other in the area having the predetermined size or less, since a new obstacle appears even if one obstacle is avoided, obstacle avoidance is not easy and obstacle sensing and avoidance are repeated. Therefore, the mobile robot may stay in the area for a long time.

The controller 200 may determine that a restriction situation occurs when the mobile robot may not repeatedly move due to the plurality of obstacles within a predetermined distance and set an escape mode to enable the mobile robot to escape from the restriction situation.

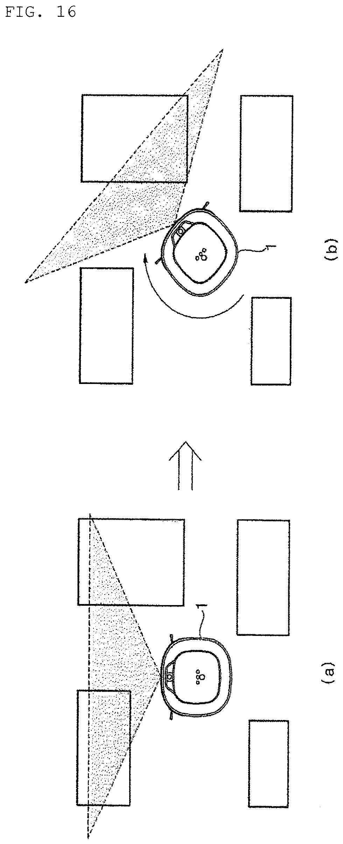

FIG. 16 is a view referenced to describe escape operation of the mobile robot in the restriction situation of FIG. 15.

As shown in (a) of FIG. 16, the mobile robot 1 recognizes the light pattern of the obtained image and determines whether the mobile robot avoids an obstacle.

When travel is impossible, the mobile robot 1 rotates by a certain angle as shown in (b) of FIG. 16 in order to avoid the obstacle. The mobile robot 1 detects a new obstacle and determines whether travel is possible, after rotation.

The mobile robot 1 analyzes a pattern through an obtained image while rotating by the certain angle and obtains and stores information on peripheral obstacles.

When the mobile robot is surrounded by a plurality of obstacles by repeating the above operation, the mobile robot 1 determines whether the mobile robot is in a restriction situation and sets an escape mode.

The controller 200 sets the escape mode, analyzes the pre-stored information on the peripheral obstacles and the pattern of the obtained image, determines whether an enterable or travelable route is present, and sets an escape route.

The controller 200 determines whether travel or entry is possible based on the size of a space between obstacles and sets the escape route, in the escape mode.

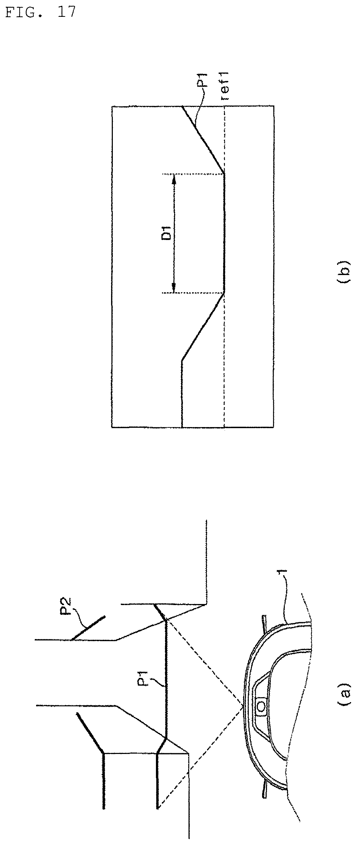

FIG. 17 is a view referenced to describe operation of the mobile robot for determining whether entry is possible in the restriction situation of FIG. 15.

As shown in (a) of FIG. 17, the mobile robot 1 emits pattern lights P1 and P2 forward through the first and second pattern emission units 120 and 130 and captures the pattern lights P1 and P2 irradiated onto the obstacle through the image obtainer 140, in the escape mode.

The pattern detector 210 analyzes the obtained image and extracts the light pattern irradiated onto the obstacle, and the obstacle information obtainer 220 analyzes the light pattern and obtains information on the obstacle such as the position, size, and shape of the obstacle.

The driving controller 230 determines whether travel or entry is possible based on the obtained information on the obstacle and sets an escape route such that the mobile robot avoids or passes the obstacle.

When the light pattern P1 appears as shown in (b) of FIG. 17, since the light pattern is not located at the reference position and the shape thereof is an oblique line, the obstacle information obtainer 220 determines that an obstacle is present in the vicinity thereof.

Since both ends of the light pattern are located above the reference position and the center portion of the light pattern is located at the reference position, the obstacle information obtainer 220 may determine that obstacles are preset on the front left side and front right side of the mobile robot.

Meanwhile, as a portion of the light pattern is displayed at the reference position, the obstacle information obtainer 220 determines that a certain space is present between the obstacle at the front left side and the obstacle at the front right side. At this time, the obstacle information obtainer 220 determines the width of the space between the obstacles through the length of the pattern displayed at the reference position.

The obstacle information obtainer may determine the width of the space by converting the light pattern based on data on the size (length) of the actual area corresponding to a unit length (e.g., 1 mm).

The obstacle information obtainer 220 calculates and supplies the length D1 of the pattern (hereinafter referred to as a linear pattern) displayed at the reference position of the light pattern to the driving controller 230.

The driving controller 230 compares the length of the pattern received from the obstacle information obtainer 220, that is, the length of a portion (linear pattern) of the pattern displayed at the reference position of the light pattern of the obtained image, with a set length and determines whether the mobile robot 1 may enter or travel.

The set length is a reference value for determining whether the mobile robot 1 may pass and is set based on a minimum width allowing travel of the main body. The set length is determined according to the size of the mobile robot 1 and is set to a value greater than the width of the mobile robot 1. At this time, the set length may be a value obtained by converting the actual length into the length of the light pattern depending on the determination method and may be set to the actual distance between obstacles in some cases.

The driving controller 230 determines that entry is impossible when the length of the linear pattern is equal to or less than the set length and determines that entry is possible when the length D1 of the linear pattern exceeds the set length.

Upon determining that the length of the linear pattern is equal to or less than the set length and thus entry is impossible, the driving controller 230 searches for a new route avoiding the front obstacle as described above. Therefore, the driving controller 230 rotates the mobile robot 1 by a certain angle and searches for the next obstacle or a new route.

When the mobile robot is set to a quick cleaning mode in the escape mode and there is an enterable route, the driving controller 230 controls the mobile robot to travel along the enterable route.

Since there may be a route, along which the mobile robot 1 has entered, or a new route even in the restriction situation, the driving controller 230 sets an escape route and attempts to escape the restriction situation if the mobile robot may enter.

The driving controller 230 may initialize existing obstacle information and newly search for an obstacle, upon setting the escape mode. Even if a new obstacle is repeatedly detected and avoidance of the obstacle is attempted, when the mobile robot may not normally travel, the driving controller 230 may determine that the mobile robot is in the restriction situation, determine that the mobile robot cannot escape from the restriction situation using the existing obstacle information, initialize the information, and then detect an obstacle.

In addition, if the mobile robot 1 is set to a basic mode in the escape mode, the driving controller generates a peripheral area map of a peripheral object and then detects and sets an enterable route from the map as an escape route.

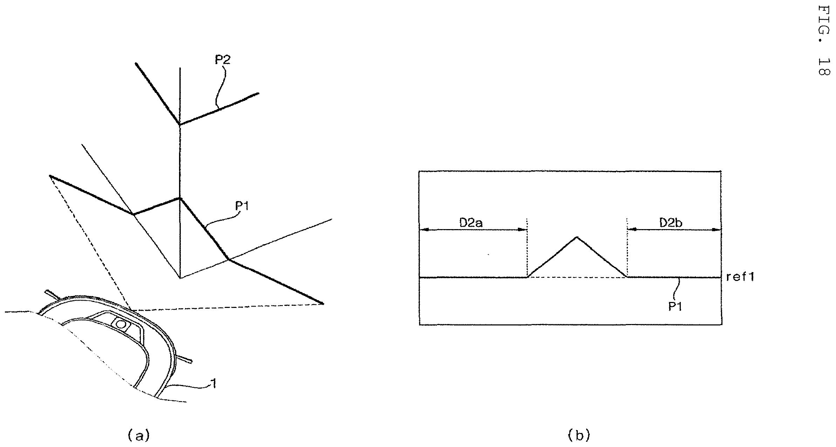

FIG. 18 is a view referenced to describe operation of the mobile robot for determining an obstacle in the restriction situation of FIG. 15.

As shown in (a) of FIG. 18, when a new obstacle appears while the mobile robot 1 rotates or travels in order to search for a route, the pattern light emitted from the pattern emission unit is irradiated onto the obstacle and thus a light pattern appears in the obtained image.

If the mobile robot 1 is located at the edge of the obstacle, as shown in (b) of FIG. 18, the center portion of the light pattern is displayed in a triangular shape and the left and right sides of the light pattern are displayed at the reference position ref1 in a straight line.

The obstacle information obtainer 220 may determine that an obstacle (edge) is present ahead and an obstacle is not present on the left or right side, based on the light pattern. Therefore, the driving controller 230 may rotate left or right to search for a new route.

At this time, the obstacle information obtainer 220 calculates and inputs the length of the linear pattern displayed at the reference position of the light pattern to the driving controller 230. The driving controller 230 may determine whether entry is possible based on the lengths D2a and D2b of the linear pattern and set a rotation direction to any one of the left side and the right side. Since the left and right patterns differ depending on the position or angle of the mobile robot 1, the obstacle is continuously detected to set the travel direction even after rotation or travel.

When a new obstacle is detected, the obstacle information obtainer 220 stores information on the new obstacle and supplies the information to the driving controller 230, and the driving controller 230 changes the escape route according to the new obstacle.

The driving controller 230 counts and stores the number of times of changing the escape route by the new obstacle within a certain distance.

As obstacles are continuously detected within a certain distance, the driving controller 230 compares the number of times of changing the escape routes with a set number and determines whether escape is completed.

At this time, the driving controller resets and counts the number of times, when a new obstacle is detected after the mobile robot travels by a certain distance or more. That is, when the escape route is repeatedly changed within the certain distance while the mobile robot travels along the predetermined escape route, the number of times is counted. In contrast, when the mobile robot travels by the certain distance or more, it is determined that the mobile robot has escaped from the corresponding area, and the number of times is reset.

When an obstacle is repeatedly detected in an area having a certain size or less even in the restriction situation, the driving controller may set the escape mode using the same method.

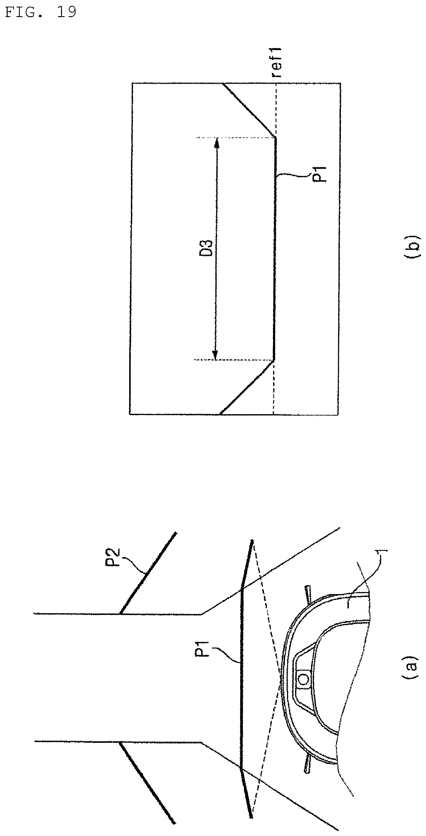

FIG. 19 is a view referenced to describe operation of the mobile robot for setting an escape route in the restriction situation of FIG. 15.

As shown in (a) of FIG. 19, when a space having a certain size is present between obstacles in the escape mode, the mobile robot 1 determines the size of the space between the obstacles as shown in FIG. 17 and determines whether travel or entry is possible.

The mobile robot 1 determines whether travel is possible according to the shape of the light pattern extracted from the obtained image, as shown in (b) of FIG. 19.

The obstacle information obtainer 220 determines that obstacles are present on the left and right sides of the mobile robot 1, because the left and right sides of the light pattern are displayed in oblique lines. In addition, the length D03 of the linear pattern of the center portion of the light pattern is calculated and input to the driving controller 230.

The driving controller 230 compares the length D03 of the linear pattern with the set length and determines that travel or entry is possible when the length of the linear pattern is equal to or greater than the set length.

If the space between the obstacles has a width allowing travel of the mobile robot based on the linear length of the light pattern, the driving controller 230 sets the corresponding route as an escape route and controls the driver 300 to maintain the travel state.

The obstacle information obtainer 220 determines obstacle information based on the light pattern of the obtained image which is continuously input during travel.

The driving controller 230 continuously determines whether travel is possible based on the obstacle information input during travel.

The driving controller 230 determines whether travel is possible again, when the length of the linear pattern of the center portion of the light pattern decreases. If the length of the linear pattern is decreased and thus is less than the set length, it is determined that travel is impossible and the mobile robot moves backward. If rotation is possible according to the size of the current space, the mobile robot rotates and avoids the obstacle and then searches for a new route.

The driving controller 230 maintains a current route when the length of the linear pattern is maintained or increased.

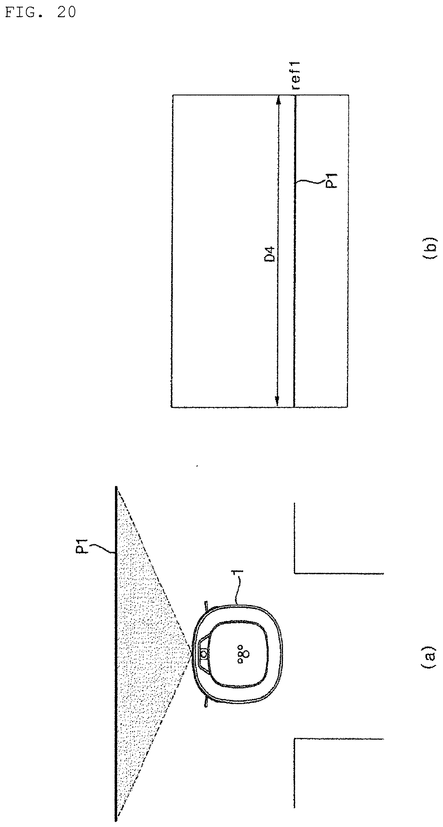

FIG. 20 is a view referenced to describe operation of the mobile robot escaping from the restriction situation of FIG. 15.

As shown in (a) of FIG. 20, the mobile robot 1 may travel between obstacles, thereby escaping from the restriction situation.

As shown in (b) of FIG. 20, when the light pattern is displayed at the reference position ref1 in a straight line, the driving controller 230 determines that the mobile robot has escaped from the restriction situation, releases the escape mode, and performs cleaning according to existing settings or travels to a specific destination. In addition, the driving controller 230 may return to a charging stand if charging is necessary.

The driving controller 230 stores the information on the obstacle according to the restriction situation and the escape route, determines whether the obstacle is the same obstacle based on the information on the obstacle when the mobile robot is restricted by the same obstacle, and attempts to escape from the restriction situation through the set escape route. When a new obstacle is detected, the obstacle information may be updated and a new escape route may be set.

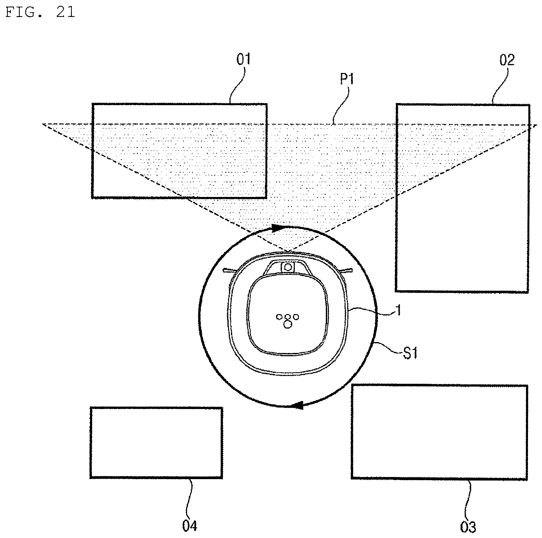

FIG. 21 is a view referenced to describe operation of the mobile robot for obtaining information on a peripheral area in the restriction situation of FIG. 15.

When the mobile robot 1 is in the restriction situation and thus the escape mode is set, as shown in FIG. 21, the mobile robot makes one rotation at a current position and detects a peripheral obstacle. When rotation is impossible at a current position, the mobile robot 1 moves by a certain distance and then makes one rotation.

Upon determining that the mobile robot is in the restriction situation due to repeated obstacle detection, the driving controller 230 deletes information on the obstacle pre-stored at the current position and initializes the information. For example, since the mobile robot may repeatedly approach the same obstacle or a moving obstacle may be present, the information on the obstacle in the peripheral area is initialized.

At this time, information on the obstacle within the certain distance from the mobile robot 1 is initialized and information on a pre-cleaned area is maintained.

The driving controller 230 controls the driver 300 such that the mobile robot 1 makes one rotation (S1).

As shown in FIG. 21, when the mobile robot 1 makes one rotation (S1) in a state in which first to fourth obstacles O1 to O4 are present, the patterns shown in (b) of FIG. 17, (b) of FIG. 18 and (b) of FIG. 19 continuously and repeatedly appear.

The obstacle information obtainer 220 analyzes the light pattern extracted from the obtained image received through the obstacle sensing unit 100 and extracts information on the obstacle located within the certain distance from the mobile robot 1.

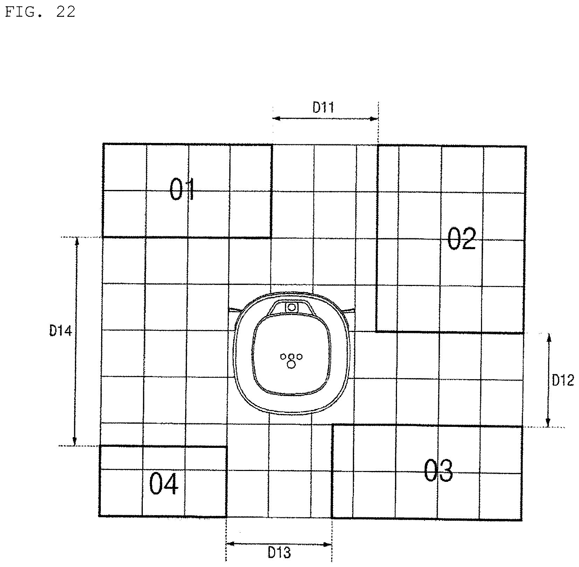

FIG. 22 is a view showing a peripheral area map generated by the mobile robot in the restriction situation of FIG. 15.

As shown in FIG. 22, the obstacle information obtainer 220 generates a peripheral area map based on information on an obstacle determined through the light pattern.

The obstacle information obtainer 220 analyzes the light pattern extracted from the obtained image received through the obstacle sensing unit 100 and determines the position and shape of the obstacle located in the peripheral area according to the light pattern.

The obstacle information obtainer 220 may compare the position of the light pattern with the reference position ref1 to determine the distance from the obstacle, determine that an obstacle is present on the left or right side according to the shape of the light pattern, e.g., a light pattern having an oblique-line shape, and determine the edge of a rectangle according to a light pattern having a triangular shape.

In addition, the obstacle information obtainer 220 may detect an obstacle located on the upper side through the second pattern light as well as the first pattern light and determine the height of the obstacle.

The obstacle information obtainer 220 determines the distances D11 to D14 between obstacles, that is, the size of a space between obstacles, according to the length of the linear pattern displayed at the reference position, as described above, in addition to the position and shape of the obstacle.

When the peripheral area map is generated, the driving controller 230 sets an escape route such that the mobile robot avoids an obstacle to escape from the restriction situation according to the peripheral area map.

The driving controller 230 determines whether the mobile robot 1 is able to travel according to the size of the space between the obstacles and sets an escape route. When the space between the obstacles has a width capable of allowing travel of the mobile robot 1, the escape route is set such that the mobile robot travels to the corresponding position. At this time, the driving controller 230 sets a rotation angle for moving the mobile robot to the corresponding position.

For example, in a state in which the mobile robot is surrounded by the first to fourth obstacles 01 to 04, since the distance D14 between the first obstacle 01 and the fourth obstacle 04 allows travel of the mobile robot 1 based on the peripheral area map, the escape route may be set such that the mobile robot escapes through the space between the first obstacle and the fourth obstacle.

When the escape route is set, the driving controller 230 controls the driver 300 such that the mobile robot moves along the escape route.

When a new obstacle is detected while moving along the escape route, the driving controller 230 changes the escape route based on the obstacle information detected through the obstacle information obtainer 220 and controls the driver 300 to move the mobile robot along the changed escape route.

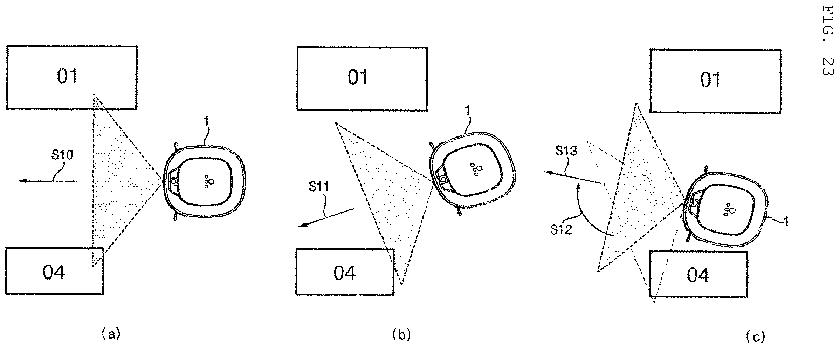

FIG. 23 is a view referenced to describe an escape method based on the mode of a mobile robot according to an embodiment of the present invention.

As shown in (a) of FIG. 23, the mobile robot 1 moves to escape through the space between the first obstacle 01 and the fourth obstacle 04, sets a direction to move straightly, rotates and then travels (S10) .

The mobile robot moves straightly in parallel to the side surfaces of the first obstacle 01 and the fourth obstacle O4, thereby escaping.

Meanwhile, as shown in (b) of FIG. 23, when the mobile robot travels at a certain angle with the obstacle between the first obstacle 01 and the fourth obstacle 04, since the length of the straight line of the light pattern before initial entry allows travel of the mobile robot 1, the mobile robot continuously travels (S11).

When the mobile robot becomes close to the fourth obstacle 04 during travel as shown in (b) of FIG. 23, the mobile robot 1 changes the escape route and rotates by a certain angle in order to avoid the fourth obstacle (S12), and moves straightly again to escape from the restriction situation (S13).

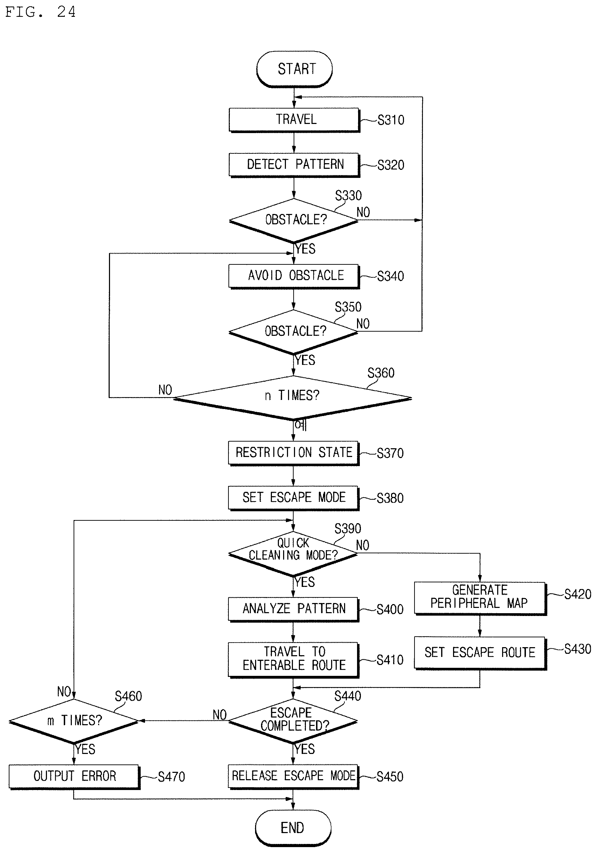

FIG. 24 is a flowchart illustrating a method of controlling a mobile robot escaping from a restriction situation according to an embodiment of the present invention.

As shown in FIG. 24, the mobile robot 1 emits first and second pattern lights through the obstacle sensing unit 100, captures the emitted pattern lights through the image obtainer 140 and inputs the obtained image (S320), while traveling (S310).

The pattern detector 210 extracts the light pattern from the obtained image, and the obstacle information obtainer 220 analyzes the light pattern and determines information on at least one of the position, shape and size of the obstacle.

The driving controller 230 maintains a current travel state along a preset route when an obstacle is not detected.

In contrast, when the obstacle is detected (S330), the obstacle information obtainer 220 supplies the obstacle information to the driving controller 230, and the driving controller 230 controls the driver 300 to change a travel route to avoid the obstacle (S340).

After the mobile robot travels while avoiding the obstacle, the driving controller 230 compares the number n of times of avoiding and detecting the obstacle with the reference number when a new obstacle is detected through the obstacle information obtainer 220, avoids the obstacle (S340) when the number n of times of avoiding and detecting the obstacle is less than the reference number and determines that the mobile robot is currently in the restriction situation (S370) when the number n of times of avoiding and detecting the obstacle is equal to or greater than the reference number.

The driving controller 230 sets the escape mode according to the currently set mode of the mobile robot (S380)

When the escape mode is set in a quick cleaning mode, the driving controller 230 analyzes the light pattern of the obtained image (S400) and controls the mobile robot to travel along the corresponding route (S410) if an enterable or travelable route is present.

Meanwhile, if the quick cleaning mode is not set, the driving controller 230 generates a peripheral area map (S420) and sets the escape route based on the information on the obstacle included in the map (S430).

The driving controller 230 determines whether the mobile robot has successfully escaped through the light pattern while the mobile robot travels according to each mode (S440) and releases the escape mode when escape is completed (S450). At this time, when the light pattern is displayed at the reference position in a straight line, it may be determined that the mobile robot has escaped to an area in which no obstacle is located.

Meanwhile, when escape fails, for example, when a new obstacle is detected, it is determined that escape has not been completed and the number of escapes is counted. If the number of escapes is less than a set number m (S460), the escape attempt according to each mode is repeated (S390 to S460).

If the number of escapes is equal to or greater than the set number, the driving controller 230 determines that escape is impossible and outputs an error (S470). At this time, predetermined warning sound or effect sound may be output such that the user confirms the position of the mobile robot 1.

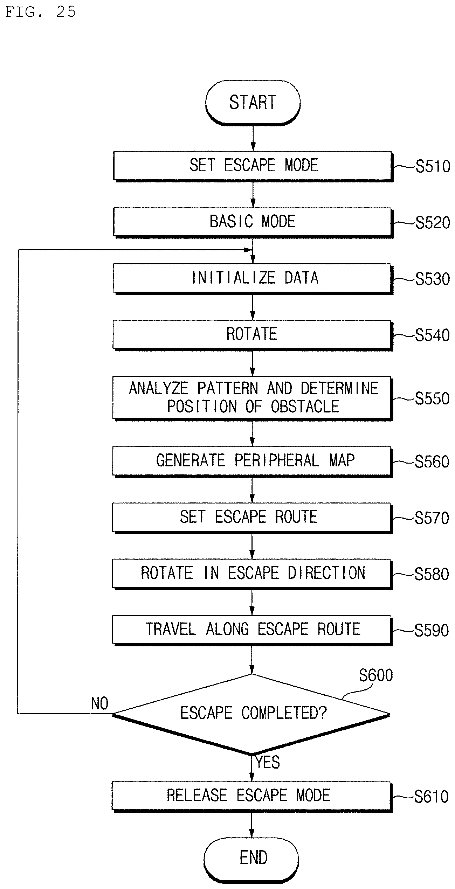

FIG. 25 is a flowchart illustrating a method of controlling a mobile robot escaping from a restriction situation in a basic mode.

As shown in FIG. 25, the mobile robot 1 sets an escape mode (S510), upon determining that the mobile robot is in the restriction situation.

When the travel and cleaning mode of the mobile robot 1 is a basic mode (S520), the driving controller initializes pre-stored data including obstacle information within a certain distance. Since there is an obstacle erroneously detected in a process of detecting a plurality of obstacles until the restriction situation is determined and the same obstacle may be detected several times, the obstacle information is deleted and is newly detected.

If rotation is possible at the current position, the driving controller 230 controls the driver 300 such that the mobile robot makes one rotation (S540). If rotation is impossible at the current position, the mobile robot may move forward or backward and then make one rotation.

The obstacle sensing unit 100 emits the pattern light and inputs the image obtained by capturing the pattern light to the pattern detector 210, while the mobile robot 1 makes one rotation. The pattern detector 210 extracts the light pattern from the obtained image, and the obstacle information obtainer 220 analyzes the light pattern and extracts information on the obstacle within a certain distance from the mobile robot 1 according to the shape, position and length of the light pattern (S550).

As described above, the obstacle information obtainer 220 compares the position of the light pattern with the reference position to determine the position of the obstacle, determines the shape or size of the obstacle from the shape of the light pattern, and determines the size (length) of the space between the obstacles according to the length of the linear pattern displayed at the reference position.

Therefore, the obstacle information obtainer 220 generates a peripheral area map including the information on the obstacle located within the certain distance from the mobile robot 1 (S560). The generated peripheral area map is stored in the data unit.

The driving controller 230 determines the travel position of the mobile robot 1 based on the generated peripheral area map and sets the escape route (S570).

When the escape route is set, the driving controller 230 controls the driver 300 such that the mobile robot moves along the escape route. Then, the driver 300 drives the mobile robot 1 to rotate by a certain angle in the escape direction (S580) and to travel in the escape direction (S590).

The obstacle information obtainer 220 continuously analyzes the light pattern of the obtained image and inputs the obstacle information to the driving controller. When the light pattern is displayed at the reference position in the straight line, the obstacle information obtainer 220 determines that an obstacle is not present and inputs the determined information to the driving controller.

The driving controller 230 determines whether escape is completed according to the information received from the obstacle information obtainer 220 (S600) .

When a new obstacle is detected, the driving controller 230 obtains information on the peripheral obstacle again and sets a new route (S530 to S590).

Meanwhile, the driving controller 230 determines that escape is completed when the obstacle is not present within the certain distance and releases the escape mode (S610).

The driving controller 230 controls the driver 300 to perform operation according to the predetermined travel or cleaning mode.

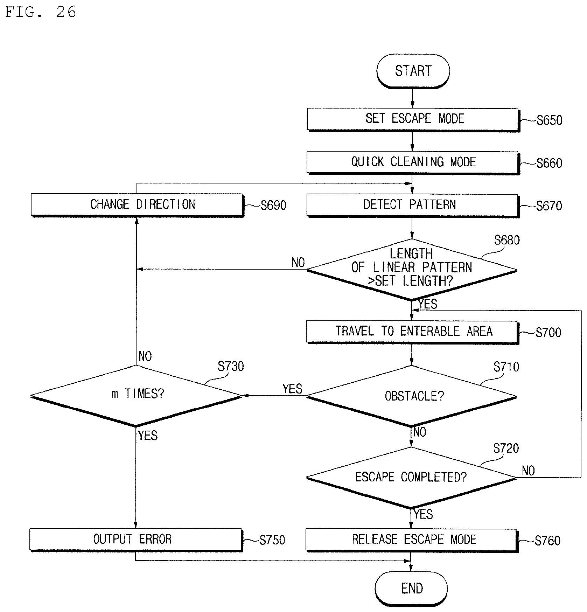

FIG. 26 is a flowchart illustrating a method of controlling a mobile robot escaping from a restriction situation in a quick cleaning mode.

As shown in FIG. 26, the mobile robot 1 sets the escape mode (S650), upon determining that the mobile robot is in the restriction situation.

When the travel and cleaning mode of the mobile robot 1 is a quick cleaning mode (S660), the driving controller 230 initializes data including information on the obstacle within the certain distance.

The obstacle sensing unit 100 emits the pattern light and inputs the image obtained by capturing the pattern light to the pattern detector 210. The pattern detector 210 extracts the light pattern from the obtained image, and the obstacle information obtainer 220 analyzes the light pattern and extracts information on the obstacle within the certain distance from the mobile robot 1 according to the shape, position and length of the light pattern (S680).

As described above, the obstacle information obtainer 220 compares the position of the light pattern with the reference position to determine the position of the obstacle, determines the shape or size of the obstacle from the shape of the light pattern, and determines the size (length) of the space between the obstacles according to the length of the linear pattern displayed at the reference position.

The driving controller 230 compares the length of the linear pattern with the set length to determine whether travel or entry is possible (S680).

If the length of the linear pattern is less than the set length and thus travel or entry is impossible, the driving controller 230 controls the driver 300 to change the travel direction of the mobile robot 1 (S690).

Meanwhile, if the length of the linear pattern is equal to or greater than the set length and thus travel or entry is possible, the driving controller 230 controls the driver 300 such that the mobile robot travels to a travelable or enterable area, and thus the driver 300 drives the mobile robot 1 to travel to the corresponding area (S700).

While the mobile robot travels, the obstacle sensing unit 100 continuously emits the pattern light and inputs the obtained image, and the obstacle information obtainer 220 analyzes the light pattern and detects the obstacle.

When a new obstacle is detected (S710), the driving controller 230 determines whether the number of detecting the obstacle is equal to or greater than the set number m (S730), and changes the travel direction (S690) when the number of detecting the obstacle is less than the set number, and controls the mobile robot to travel along the enterable route in the changed direction.

Meanwhile, when the number of detecting the obstacle is equal to or greater than the set number m after setting the route in the escape mode, the driving controller 230 determines that escape has failed and
outputs an error (S750).

Since the obstacles have been continuously detected in the travel direction after the route is set such that the mobile robot travels to the enterable area, that is, since the obstacle has been encountered by the set number or more to change the travel direction, the driving controller 230 determines that escape has failed.

In addition, after setting the route, it is determined that escape is not completed within the certain distance (S720) and travel to the enterable route is repeated (S700).

Meanwhile, when the obstacle is not detected after the mobile robot travels by the certain distance or more within the set number, the driving controller 230 determines that escape is completed (S720) and releases the escape mode (S760).

The driving controller 230 controls the driver 300 to perform operation according to the predetermined travel or cleaning mode. In addition, the driving controller 230 may return to the charging stand when charging is necessary.

Accordingly, the mobile robot 1 travels while detecting the obstacle using the light pattern, detects the peripheral obstacle based on the light pattern in the restriction situation, and sets the travelable or enterable route as the escape route, thereby rapidly escaping from the restriction situation.

The above-described embodiments are merely examples. Those skilled in the art will appreciate that various modifications and applications are possible, without departing from the scope of the invention as disclosed in the accompanying claims.

## Claims

1. A mobile robot comprising:
a main body (11) configured to travel about a cleaning area and to suck in a foreign material in the cleaning area;
a first pattern emission unit (120) disposed on a front surface of the main body (11) to emit light of a first pattern toward a front lower side of the main body (11) ;
a second pattern emission unit (130) disposed on the front surface of the main body (11) and disposed below the first pattern emission unit (120) to emit light of a second pattern toward a front upper side of the main body (11);
an image obtainer (140) provided on the front surface of the main body (11) to obtain an image of a front side of the main body (11); and
a controller (200) configured to detect a first light pattern (P1) corresponding to the light of the first pattern and a second light pattern (P2) corresponding to the light of the second pattern from the obtained image received from the image obtainer (140), to determine an obstacle, and to perform control to pass or avoid the obstacle,
wherein the controller (200) determines a restriction situation when travel is impossible due to a plurality of obstacles to set an escape mode, detects information on peripheral obstacles to set an escape route, and enables escape from the restriction situation through travel along the escape route, **characterised in that**,
when an operation mode of the main body (11) is a quick cleaning mode upon setting the escape mode, the controller (200) determines whether entry is possible according to a distance between two detected obstacles among the plurality of obstacles and sets the escape route if a travelable area is present, and when an operation mode of the main body (11) is a basic mode upon setting the escape mode, the controller (200) detects information on the plurality of obstacles within a predetermined distance, generates a peripheral area map including the information on the obstacles, searches for a travelable area based on the peripheral area map, and sets the escape route, and wherein,
when an operation mode of the main body (11) is a basic mode, the controller (200) makes one rotation at a current position, analyzes the first light pattern (P1) or the second light pattern (P2) of the obtained image during one rotation, detects the information on the plurality of obstacles, and generates the peripheral area map.

2. The mobile robot according to claim 1, wherein the controller (200) includes:
a pattern detector (210) configured to extract a light pattern from the obtained image;
an obstacle information obtainer (220) configured to determine a position, shape and size of an obstacle according to a shape or length of the first light pattern (P1) or the second light pattern (P2) and to determine a distance between obstacles according to a length of a linear pattern displayed at a reference position when at least a portion of the first light pattern (P1) is displayed at the reference position; and
a driving controller (230) configured to compare the length of the linear pattern received from the obstacle information obtainer (220) with a set length, to determine whether travel is possible, and to set the escape route.

3. The mobile robot according to claim 2,
wherein the obstacle information obtainer (220) initializes pre-stored information on obstacles within a predetermined distance and then detects the information on the plurality of obstacles again, upon setting the escape mode.

4. The mobile robot according to claim 2, wherein the driving controller (230) sets the set length based on a minimum width enabling travel of the main body (11) in correspondence with a size of the main body (11).

5. The mobile robot according to claim 2, wherein the driving controller (230) changes the escape route when a new obstacle is detected while traveling along the escape route, upon setting the escape mode.

6. The mobile robot according to claim 5, wherein the driving controller (230):
counts a number of times of changing the escape route,
determines that escape is completed and releases the escape mode, upon reaching an area in which an obstacle is not present within a predetermined distance before the number of times reaches a set number,
determines that escape from the restriction situation is not performed and outputs an error, when the number of times reaches the set number, and
resets and then counts the number of times when a new obstacle is detected after the main body (11) travels by a predetermined distance or more.

7. The mobile robot according to claim 2, wherein the driving controller (230):
stores the escape route when escape is completed; and
enables travel along the stored escape route when a restriction situation occurs by the same obstacles as the plurality of obstacles.

8. A method of controlling a mobile robot, the method comprising:
emitting light of a first pattern and light of a second pattern and traveling while capturing a front image;
detecting a first light pattern (P1) corresponding to the light of the first pattern and a second light pattern (P2) corresponding to the second pattern from an image obtained by capturing and detecting an obstacle;
determining a restriction situation when travel is impossible due to a plurality of obstacles detected by the first light pattern (P1) or the second light pattern (P2) and setting an escape mode;
detecting information on the plurality of obstacles, searching for a travelable route and setting an escape route; and
traveling along the escape route and escaping from the restriction situation,
**characterised in that** the setting of the escape route further includes:
when an operation mode is a quick cleaning mode, determining whether entry is possible according to a distance between two detected obstacles among the plurality of obstacles and setting the escape route if a travelable area is present;
when the operation mode is a basic mode, detecting information on the plurality of obstacles within a predetermined distance, generating a peripheral area map including the information on the obstacles, searching for a travelable area based on the peripheral area map, and setting the escape route, when the operation mode is a basic mode; and
when the operation mode is the basic mode, the first light pattern (P1) or the second light pattern (P2) of the obtained image received while making one rotation is analyzed, the information on the plurality of obstacles is detected, and the peripheral area map is generated.

9. The method according to claim 8, further comprising initializing pre-stored information on obstacles within a predetermined distance and then detecting the information on the plurality of obstacles again, upon setting the escape mode.

10. The method according to claim 8, further comprising:
changing the escape route when a new obstacle is detected while traveling along the escape route;
counting a number of times of changing the escape route when the escape route is changed in a state of traveling by a predetermined distance or less;
determining that escape is completed upon reaching an area in which an obstacle is not present within a predetermined distance before the number of times reaches a set number, and releasing the escape mode; and
determining that escape from the restriction situation is not performed and outputting an error, when the number of times reaches the set number.

11. The method according to claim 8, further comprising:
storing the escape route when escape is completed by travel along the escape route; and
traveling along the stored escape route when a restriction state occurs by the same obstacles as the plurality of obstacles.

## Patentansprüche

1. Mobiler Roboter, der aufweist:
einen Hauptkörper (11), der eingerichtet ist, ein Reinigungsgebiet zu befahren und Fremdmaterial im Reinigungsgebiet einzusaugen;
eine erste Musterausstrahlungseinheit (120), die an einer Vorderfläche des Hauptkörpers (11) angeordnet ist, um Licht eines ersten Musters in Richtung einer vorderen Unterseite des Hauptkörpers (11) auszustrahlen;
eine zweite Musterausstrahlungseinheit (130), die an einer Vorderfläche des Hauptkörpers (11) angeordnet ist und unter der ersten Musterausstrahlungseinheit (120) angeordnet ist, um Licht eines zweiten Musters in Richtung einer vorderen Oberseite des Hauptkörpers (11) auszustrahlen;
eine Bilderfassungsvorrichtung (140), die an der Vorderfläche des Hauptkörpers (11) vorgesehen ist, um ein Bild der Vorderfläche des Hauptkörpers (11) zu erfassen; und
eine Steuereinheit (200), die eingerichtet ist, aus dem von der Bilderfassungsvorrichtung (140) empfangenen erfassten Bild ein erstes Lichtmuster (P1), das dem Licht des ersten Musters entspricht, und ein zweites Lichtmuster (P2), das dem Licht des zweiten Musters entspricht, zu erfassen, um ein Hindernis zu bestimmen und eine Steuerung durchzuführen, um das Hindernis zu umfahren oder zu vermeiden,
wobei die Steuereinheit (200) eine Beschränkungssituation bestimmt, wenn das Fahren aufgrund einer Vielzahl von Hindernissen unmöglich ist, um einen Rückzugsmodus festzulegen, Informationen zu Hindernissen in der Umgebung erfasst,
um einen Rückzugsweg festzulegen, und den Rückzug aus einer Beschränkungssituation durch das Fahren entlang des Rückzugswegs ermöglicht,
**dadurch gekennzeichnet, dass**
wenn ein Betriebsmodus des Hauptkörpers (11) beim Festlegen des Rückzugsmodus ein Schnellreinigungsmodus ist, bestimmt die Steuereinheit (200), ob das Eintreten gemäß einem Abstand zwischen zwei erfassten Hindernissen aus der Vielzahl von Hindernissen möglich ist und legt den Rückzugsweg fest, wenn ein befahrbares Gebiet vorhanden ist, und
wenn ein Betriebsmodus der Hauptkörpers (11) beim Festlegen des Rückzugsmodus ein Grundmodus ist, erfasst die Steuereinheit (200) Informationen zu der Vielzahl der Hindernisse innerhalb eines bestimmten Abstands, erzeugt eine Übersicht eines Umgebungsgebiets, die Informationen zu den Hindernissen enthält, sucht nach einem befahrbaren Gebiet basierend auf der Übersicht des Umgebungsgebiets und legt den Rückzugsweg fest, und wobei
wenn ein Betriebsmodus des Hauptkörpers (11) ein Grundmodus ist, führt die Steuereinheit (200) eine Rotation an einer aktuellen Position durch, analysiert das erste Lichtmuster (P1) oder das zweite Lichtmuster (P2) des während einer Rotation des erfassten Bilds, erfasst die Informationen zu der Vielzahl von Hindernissen und erzeugt die Übersicht des Umgebungsgebiets.

2. Mobiler Roboter nach Anspruch 1, wobei die Steuereinheit (200) aufweist:
eine Mustererfassungseinrichtung (210), die eingerichtet ist, um ein Lichtmuster aus dem erfassten Bild zu extrahieren;
eine Hindernisinformations-Erfassungsvorrichtung (220), die eingerichtet ist, um eine Position, Form und Größe eines Hindernisses gemäß einer Form oder Länge des ersten Lichtmusters (P1) oder des zweiten Lichtmusters (P2) zu bestimmen und ein Abstand zwischen Hindernissen gemäß einer Länge von einem linearen Muster zu bestimmen, das an einer Referenzposition angezeigt wird, wenn wenigstens ein Teil des ersten Lichtmusters (P1) an der Referenzposition angezeigt wird; und
eine Antriebssteuereinheit (230), die eingerichtet ist, die Länge des von der Hindernisinformations-Erfassungsvorrichtung (220) empfangenen linearen Musters mit einer festgelegten Länge zu vergleichen, um zu bestimmen, ob eine Fahrt möglich ist, und um den Rückzugsweg festzulegen.

3. Mobiler Roboter nach Anspruch 2,
wobei die Hindernisinformations-Erfassungsvorrichtung (220) vorab gespeicherte Informationen zu Hindernissen innerhalb eines bestimmten Abstands initialisiert und dann erneut Informationen zu der Vielzahl von Hindernissen beim Festlegen des Rückzugsmodus erfasst.

4. Mobiler Roboter nach Anspruch 2, wobei die Antriebssteuereinheit (230) die festgelegte Länge basierend auf einer minimalen Breite festlegt, die die Fahrt des Hauptkörpers (11) entsprechend einer Größe des Hauptkörpers (11) ermöglicht.

5. Mobiler Roboter nach Anspruch 2, wobei die Antriebssteuereinheit (230) den Rückzugsweg beim Festlegen des Rückzugsmodus ändert, wenn ein neues Hindernis erfasst wird, während es entlang dem Rückzugsweg fährt.

6. Mobiler Roboter nach Anspruch 5, wobei die Antriebssteuereinheit (230):
eine Anzahl von Vorkommen der Änderung des Rückzugswegs zählt, bestimmt, dass der Rückzug abgeschlossen ist und den Rückzugsmodus beim Erreichen eines Gebiets auflöst, in dem kein Hindernis innerhalb eines bestimmten Abstands vorhanden ist, bevor die Anzahl der Vorkommen eine festgelegte Anzahl erreicht,
bestimmt, dass der Rückzug aus der Einschränkungssituation nicht durchgeführt wird, und einen Fehler ausgibt, wenn die Anzahl der Vorkommen die festgelegte Anzahl erreicht, und
die Anzahl der Vorkommen zurücksetzt und dann zählt, wenn ein neues Hindernis erfasst wird, nachdem der Hauptkörper (11) um einen bestimmten Abstand oder weiter fährt.

7. Mobiler Roboter nach Anspruch 2, wobei die Antriebssteuereinheit (230):
den Rückzugsweg speichert, wenn der Rückzug abgeschlossen ist;
und
eine Fahrt entlang dem gespeicherten Rückzugsweg ermöglicht, wenn eine Beschränkungssituation durch die gleichen Hindernisse wie die Vielzahl der Hindernisse auftritt.

8. Verfahren zum Steuern eines mobilen Roboters, wobei das Verfahren aufweist:
Ausstrahlen von Licht eines ersten Musters und Licht eines zweiten Musters und Fahren, während ein vorderes Bild erfasst wird;
Erfassen eines ersten Lichtmusters (P1), das dem Licht des ersten Musters entspricht, und eines zweiten Lichtmuster (P2), das dem zweiten Muster entspricht, aus einem Bild, das durch Aufnehmen und Erfassen eines Hindernisses erhalten wurde;
Bestimmen einer Beschränkungssituation, wenn Fahren aufgrund einer Vielzahl von Hindernissen unmöglich ist, die durch das erste Lichtmuster (P1) oder das zweite Lichtmuster (P2) erfasst wurden, und Festlegen eines Rückzugsmodus;
Erfassen von Informationen zu einer Vielzahl von Hindernissen, Suchen eines befahrbaren Wegs und Festlegen eines Rückzugswegs; und
Fahren entlang des Rückzugswegs und Rückzug aus der Einschränkungssituation, **dadurch gekennzeichnet, dass**
das Festlegen des Rückzugswegs weiterhin aufweist:
wenn ein Betriebsmodus ein Schnellreinigungsmodus ist, Bestimmen, gemäß einem Abstand zwischen zwei erfassten Hindernissen aus der Vielzahl von Hindernissen, ob das Eintreten möglich ist, und Festlegen des Rückzugswegs, wenn ein befahrbares Gebiet vorhanden ist;
wenn der Betriebsmodus ein Grundmodus ist, Erfassen von Informationen zu der Vielzahl von Hindernissen innerhalb eines bestimmten Abstands, Erzeugen einer Übersicht eines Umgebungsgebiets, die Informationen zu den Hindernissen aufweist, Suchen nach einem befahrbaren Gebiet basierend auf der Übersicht des Umgebungsgebiets und Festlegen des Rückzugswegs, wenn der Betriebsmodus ein Grundmodus ist; und
wenn der Betriebsmodus der Grundmodus ist, wird das erste Lichtmuster (P1) oder das zweite Lichtmuster (P2) des erfassten Bilds, das empfangen wurde, während eine Rotation durchgeführt wurde, analysiert, die Informationen zu der Vielzahl von Hindernissen werden erfasst und die Übersicht des Umgebungsgebiets wird erzeugt.

9. Verfahren nach Anspruch 8, das weiterhin aufweist das Initialisieren von vorab gespeicherten Informationen zu Hindernissen innerhalb eines bestimmten Abstands und dann das Erfassen von Informationen zu der Vielzahl von Hindernissen erneut beim Festlegen des Rückzugsmodus.

10. Verfahren nach Anspruch 8, das weiterhin aufweist:
Ändern des Rückzugswegs, wenn ein neues Hindernis erfasst wird, während der Fahrt entlang des Rückzugswegs;
Zählen einer Anzahl von Vorkommen der Änderung des Rückzugswegs, wenn der Rückzugsweg in einen Zustand des Fahrens um einen bestimmten Abstand oder weniger geändert wird;
Bestimmen, dass der Rückzug abgeschlossen ist, wenn ein Gebiet erreicht wird, in dem kein Hindernis innerhalb eines bestimmten Abstands vorhanden ist, bevor die Anzahl der Vorkommen eine festgelegte Anzahl erreicht, und Auflösen des Rückzugsmodus; und
Bestimmen, dass der Rückzug aus der Einschränkungssituation nicht durchgeführt wird, und Ausgeben eines Fehlers, wenn die Anzahl der Vorkommen die festgelegte Anzahl erreicht.

11. Verfahren nach Anspruch 8, das weiterhin aufweist:
Speichern des Rückzugswegs, wenn der Rückzug durch Fahren entlang des Rückzugswegs abgeschlossen ist; und
Fahren entlang dem gespeicherten Rückzugsweg, wenn ein Beschränkungszustand durch die gleichen Hindernisse wie die Vielzahl der Hindernisse auftritt.

## Revendications

1. Robot mobile comprenant :
un corps principal (11) configuré pour se déplacer dans une zone de nettoyage et pour aspirer un corps étranger dans la zone de nettoyage ;
une première unité d'émission de motif (120) disposée sur une surface avant du corps principal (11) pour émettre de la lumière d'un premier motif vers un côté inférieur avant du corps principal (11) ;
une deuxième unité d'émission de motif (130) disposée sur la surface avant du corps principal (11) et disposée en dessous de la première unité d'émission de motif (120) pour émettre de la lumière d'un deuxième motif vers un côté supérieur avant du corps principal (11) ;
un obtenteur d'image (140) prévu sur la surface avant du corps principal (11) pour obtenir une image d'un côté avant du corps principal (11) ; et
un dispositif de commande (200) configuré pour détecter un premier motif lumineux (P1) correspondant à la lumière du premier motif et un deuxième motif lumineux (P2) correspondant à la lumière du deuxième motif à partir de l'image obtenue reçue à partir de l'obtenteur d'image (140), pour déterminer un obstacle, et pour effectuer une commande pour franchir ou éviter l'obstacle,
dans lequel le dispositif de commande (200) détermine une situation de restriction lorsqu'un déplacement est impossible en raison d'une pluralité d'obstacles pour définir un mode d'échappement, détecte des informations sur des obstacles périphériques pour définir un trajet d'échappement, et permet un échappement de la situation de restriction par le biais d'un déplacement le long du trajet d'échappement,
**caractérisé en ce que**,
lorsqu'un mode de fonctionnement du corps principal (11) est un mode de nettoyage rapide lors d'une définition du mode d'échappement, le dispositif de commande (200) détermine si une entrée est possible conformément à une distance entre deux obstacles détectés parmi la pluralité d'obstacles et définit le trajet d'échappement si une zone de déplacement possible est présente, et lorsqu'un mode de fonctionnement du corps principal (11) est un mode de base lors d'une définition du mode d'échappement, le dispositif de commande (200) détecte des informations sur la pluralité d'obstacles dans une distance prédéterminée, génère une carte de zone périphérique comportant les informations sur les obstacles, recherche une zone de déplacement possible sur la base de la carte de zone périphérique, et définit le trajet d'échappement, et dans lequel,
lorsqu'un mode de fonctionnement du corps principal (11) est un mode de base, le dispositif de commande (200) réalise une rotation à une position courante, analyse le premier motif lumineux (P1) ou le deuxième motif lumineux (P2) de l'image obtenue durant une rotation, détecte les informations sur la pluralité d'obstacles, et génère la carte de zone périphérique.

2. Robot mobile selon la revendication 1, dans lequel le dispositif de commande (200) comporte :
un détecteur de motif (210) configuré pour extraire un motif lumineux de l'image obtenue ;
un obtenteur d'informations d'obstacle (220) configuré pour déterminer une position, une forme et une taille d'un obstacle conformément à une forme ou une longueur du premier motif lumineux (P1) ou du deuxième motif lumineux (P2) et pour déterminer une distance entre des obstacles conformément à une longueur d'un motif linéaire présenté à une position de référence lorsqu'au moins une partie du premier motif lumineux (P1) est présentée à la position de référence ; et
un dispositif de commande de pilotage (230) configuré pour comparer la longueur du motif linéaire reçue à partir de l'obtenteur d'informations d'obstacle (220) à une longueur définie, pour déterminer si un déplacement est possible, et pour définir le trajet d'échappement.

3. Robot mobile selon la revendication 2,
dans lequel l'obtenteur d'informations d'obstacle (220) initialise des informations stockées au préalable sur des obstacles dans une distance prédéterminée et ensuite détecte les informations sur la pluralité d'obstacles à nouveau, lors d'une définition du mode d'échappement.

4. Robot mobile selon la revendication 2, dans lequel le dispositif de commande de pilotage (230) définit la longueur définie sur la base d'une largeur minimale permettant un déplacement du corps principal (11) en correspondance avec une taille du corps principal (11).

5. Robot mobile selon la revendication 2, dans lequel le dispositif de commande de pilotage (230) change le trajet d'échappement lorsqu'un nouvel obstacle est détecté pendant un déplacement le long du trajet d'échappement, lors d'une définition du mode d'échappement.

6. Robot mobile selon la revendication 5, dans lequel le dispositif de commande de pilotage (230) :
compte un nombre de fois de changement du trajet d'échappement,
détermine qu'un échappement est terminé et lève le mode d'échappement, lors d'une arrivée dans une zone dans laquelle un obstacle n'est pas présent dans une distance prédéterminée avant que le nombre de fois n'arrive à un nombre défini,
détermine qu'un échappement de la situation de restriction n'est pas effectué et sort une erreur, lorsque le nombre de fois arrive au nombre défini, et
redéfinit et ensuite compte le nombre de fois où un nouvel obstacle est détecté après que le corps principal (11) s'est déplacé sur une distance prédéterminée ou plus.

7. Robot mobile selon la revendication 2, dans lequel le dispositif de commande de pilotage (230) :
stocke le trajet d'échappement lorsqu'un échappement est terminé ; et
permet un déplacement le long du trajet d'échappement stocké lorsqu'une situation de restriction se produit par les mêmes obstacles que la pluralité d'obstacles.

8. Procédé de commande d'un robot mobile, le procédé comprenant :
l'émission de lumière d'un premier motif et de lumière d'un deuxième motif et le déplacement pendant une capture d'une image avant ;
la détection d'un premier motif lumineux (P1) correspondant à la lumière du premier motif et d'un deuxième motif lumineux (P2) correspondant au deuxième motif à partir d'une image obtenue en capturant et détectant un obstacle ;
la détermination d'une situation de restriction lorsqu'un déplacement est impossible en raison d'une pluralité d'obstacles détectés par le premier motif lumineux (P1) ou le deuxième motif lumineux (P2) et la définition d'un mode d'échappement ;
la détection d'informations sur la pluralité d'obstacles, la recherche d'un trajet de déplacement possible et la définition d'un trajet d'échappement ; et
le déplacement le long du trajet d'échappement et l'échappement de la situation de restriction,
**caractérisé en ce que**
la définition du trajet d'échappement comporte en outre :
lorsqu'un mode de fonctionnement est un mode de nettoyage rapide, le fait de déterminer si une entrée est possible conformément à une distance entre deux obstacles détectés parmi la pluralité d'obstacles et la définition du trajet d'échappement si une zone de déplacement possible est présente ;
lorsque le mode de fonctionnement est un mode de base, la détection d'informations sur la pluralité d'obstacles dans une distance prédéterminée, la génération d'une carte de zone périphérique comportant les informations sur les obstacles, la recherche d'une zone de déplacement possible sur la base de la carte de zone périphérique, et la définition du trajet d'échappement, lorsque le mode de fonctionnement est un mode de base ; et
lorsque le mode de fonctionnement est le mode de base, le premier motif lumineux (P1) ou le deuxième motif lumineux (P2) de l'image obtenue reçue pendant une réalisation d'une rotation est analysé, les informations sur la pluralité d'obstacles sont détectées, et la carte de zone périphérique est générée.

9. Procédé selon la revendication 8, comprenant en outre l'initialisation d'informations mémorisées au préalable sur des obstacles dans une distance prédéterminée et ensuite la détection des informations sur la pluralité d'obstacles à nouveau, lors d'une définition du mode d'échappement.

10. Procédé selon la revendication 8, comprenant en outre :
le changement du trajet d'échappement lorsqu'un nouvel obstacle est détecté pendant un déplacement le long du trajet d'échappement ;
le comptage d'un nombre de fois de changement du trajet d'échappement lorsque le trajet d'échappement est changé dans un état de déplacement sur une distance prédéterminée ou moins ;
le fait de déterminer qu'un échappement est terminé lors d'une arrivée dans une zone dans laquelle un obstacle n'est pas présent dans une distance prédéterminée avant que le nombre de fois n'arrive à un nombre défini, et la levée du mode d'échappement ; et
le fait de déterminer qu'un échappement de la situation de restriction n'est pas effectué et la sortie d'une erreur, lorsque le nombre de fois arrive au nombre défini.

11. Procédé selon la revendication 8, comprenant en outre :
le stockage du trajet d'échappement lorsqu'un échappement est terminé par un déplacement le long du trajet d'échappement ; et
le déplacement le long du trajet d'échappement stocké lorsqu'un état de restriction se produit par les mêmes obstacles que la pluralité d'obstacles.
